# EUROPEAN PATENT SPECIFICATION

(11) **EP 3 553 147 B1**
(45) Date of publication and mention of the grant of the patent: **11.05.2022**
(21) Application number: 17880979.4
(22) Date of filing: 08.12.2017
(51) Int. Cl.: C09K 3/00, B05D 7/24, C08F 220/12, C08F 220/56, C08F 226/06, C09D 133/00, C09D 201/02, C09K 3/18, C08F 220/34, C08F 220/58, C09D 133/14, C09D 5/16, C09D 125/18, C08F 220/60, C09D 7/65, B05D 3/00

(54) **SURFACE TREATMENT LIQUID AND SURFACE TREATMENT METHOD**
OBERFLÄCHENBEHANDLUNGSFLÜSSIGKEIT UND OBERFLÄCHENBEHANDLUNGSVERFAHREN
LIQUIDE DE TRAITEMENT DE SURFACE ET PROCÉDÉ DE TRAITEMENT DE SURFACE

(30) Priority: 14.12.2016 JP 2016242723
(43) Date of publication of application: 16.10.2019
(73) Proprietor: Tokyo Ohka Kogyo Co., Ltd., Kawasaki-shi, Kanagawa 211-0012 (JP)
(72) Inventor: SENZAKI Takahiro, Kawasaki-shi Kanagawa 211-0012 (JP); NOGUCHI Takuya, Kawasaki-shi Kanagawa 211-0012 (JP)
(74) Representative: Plasseraud IP
(86) International application number: PCT/JP2017/044238
(87) International publication number: WO 2018/110461

(56) References cited:
- EP-A1- 2 703 465
- WO-A1-2008/154279
- WO-A1-2012/014761
- WO-A1-2012/014761
- CN-A- 101 987 878
- JP-A- H04 296 756
- JP-A- 2001 123 107
- JP-A- 2002 080 831
- JP-A- 2002 080 831
- JP-A- 2002 146 155
- JP-A- 2003 012 726
- JP-A- 2003 012 726
- JP-A- 2004 115 718
- JP-A- 2010 209 507
- JP-A- 2011 042 735
- JP-A- 2011 511 842
- JP-A- 2014 511 852
- JP-A- 2016 522 106
- US-A1- 2016 102 213
- SUN, JIAN ET AL.: 'improved chlorine resistance of polyamide thin-film composite membranes with a terpolymer coating' SEPARATION AND PURIFICATION TECHNOLOGY vol. 157, 2016, ISSN 1383-5866 pages 112 - 119, XP029362134

## Description

### TECHNICAL FIELD

The present invention relates to a surface treatment liquid, and a surface treatment method using the surface treatment liquid.

### BACKGROUND ART

Conventionally, in order to modify properties of surfaces of various types of articles, various surface treatment liquids have been used. Among surface modification, there are many demands for making the surfaces of articles hydrophilic or hydrophobic, and accordingly many agents and surface treatment liquids for making the surfaces of articles hydrophilic or hydrophobic have been proposed.

For such agents for surface treatment, for example, as a surface conditioner capable of imparting a hydrophilic property and an antifouling property to a coating film surface, a copolymer having a weight-average molecular weight of 1500 to 50000 in which at least an acrylamide monomer and a siloxy group-containing mono(meth)acrylate monomer having a specific skeleton are copolymerized has been proposed (Patent Document 1).

Patent Document 1: Japanese Patent No. 5437523

US 2016/0102213 A1 discloses a surface treatment liquid agent in which a resin having a nitrogen-containing aliphatic heterocyclic group derived from acryloylmorpholine (ACMO) is blended, wherein the surface treatment liquid suppresses nonspecific adsorption to glass. EP 2 703 465 A1 discloses a water/oil repellent composition comprising a copolymer based on polyfluoroalkyl monomer units and vinyl chloride monomer units, and an aqueous medium containing water and an amide solvent (I). JP 2003 012726 A discloses a ultraviolet absorbing resin comprising a compound having reactive type ultraviolet absorbing actions and a polymerizable dimethylpolysiloxane as essential components.

### DISCLOSURE OF THE INVENTION

### Problems to be Solved by the Invention

However, when a surface is treated to be hydrophilic by using the surface conditioner disclosed in Patent Document 1, even when a surface of a treatment target is treated with a solution including only the surface conditioner, the surface conditioner is not easily attached to the surface of the treatment target, and thus a desired hydrophilic effect cannot easily be obtained. Therefore, Patent Document 1 uses a solution as a surface treatment liquid obtained by blending a solution of a surface conditioner with resin such as acrylic resin, polyester resin, urethane resin, alkyd resin, epoxy resin, and polyamine resin, as a coating film formation component.

Further, when a surface treatment liquid including the surface conditioner and a coating film formation component disclosed in Patent Document 1 is used, the surface of the treatment target is covered with a coating film including resin. Therefore, the surface can be successfully made hydrophilic, however useful surface properties of the treatment target are damaged in the process.

The present invention has been made considering the above-mentioned problems, and has an object to provide a surface treatment liquid capable of successfully making a surface of a treatment target hydrophilic or hydrophobic even without including having a coating film-formation resin, and a surface treatment method using such a surface treatment liquid.

### Means for Solving the Problems

The present inventors have found that the above-mentioned problems can be solved when in a surface treatment liquid including a resin (A) and a solvent (C), a resin having a functional group I that is a nitrogen-containing heterocyclic group and a functional group II that is a functional group other than the functional group I and is one or more groups selected from hydrophilic groups and hydrophobic groups, and including a constituent unit (a1) that has the functional group I, and one or more constituent units selected from the group consisting of a constituent unit (a2) that has a cationic group in a side chain and a constituent unit (a3) that has an anionic group in a side chain,
wherein, in the constituent unit (al) having the functional group I, when the functional group I is in the side chain and the nitrogen-containing heterocyclic group as the functional group I is a functional group that can be made to be cationic, the resin (A) may not need to have a constituent unit (a2) in addition to the constituent unit (al), and when an anionic group selected from a phenolic hydroxyl group or a carboxy group is included in the constituent unit (al) that has the functional group I, the resin (A) need not include the constituent unit (a3) in addition to the constituent unit (a1),
wherein the hydrophilic group is an anionic group or a cationic group,
wherein the cationic group is selected from a functional group consisting of a cation and a counter anion, and a functional group that can be made to be cationic, and the anionic group is selected from a functional group consisting of an anion and counter cation, and a functional group that can be made to be anionic, and
wherein the compound giving a nitrogen-containing heterocyclic group is at least one compound selected from the group consisting of pyrrole, oxazole, isoxazole, oxadiazole,thiazole, isothiazole, thiadiazole, imidazole, triazole, pyrazine, pyrimidine, pyridazine, triazine, tetrazine, pentazine, indole, isoindole, indolizine, benzimidazole, benzoxazole, benzothiazole, carbazole, purine, quinoline, isoquinoline, quinazoline, phthalazine, cinnoline, and quinoxaline, and
wherein the hydrophobic group is one or more groups selected from the group consisting of a silyl group, and a siloxane group, is used as the resin (A), thereby arriving at completion of the present invention.

A first aspect of the present invention is a surface treatment liquid, including a resin (A), and a solvent (C), wherein the resin (A) is a functional group I that is a nitrogen-containing heterocyclic group and a functional group II that is a functional group other than the functional group I and is of one or more groups selected from hydrophilic groups and hydrophobic groups, and
the resin (A) includes a constituent unit (a1) having the functional group I, and
one or more constituent units selected from the group consisting of a constituent unit (a2) having a cationic group in a side chain and a constituent unit (a3) having an anionic group in a side chain,

wherein, in the constituent unit (al) having the functional group I, when the functional group I is in the side chain and the nitrogen-containing heterocyclic group as the functional group I is a functional group that can be made to be cationic, the resin (A) may not need to have a constituent unit (a2) in addition to the constituent unit (al), and when an anionic group selected from a phenolic hydroxyl group or a carboxy group is included in the constituent unit (al) that has the functional group I, the resin (A) need not include the constituent unit (a3) in addition to the constituent unit (a1),
wherein the hydrophilic group is an anionic group or a cationic group,
wherein the cationic group is selected from a functional group consisting of a cation and a counter anion, and a functional group that can be made to be cationic, and the anionic group is selected from a functional group consisting of an anion and counter cation, and a functional group that can be made to be anionic, and
wherein the compound giving a nitrogen-containing heterocyclic group is at least one compound selected from the group consisting of pyrrole, oxazole, isoxazole, oxadiazole,thiazole, isothiazole, thiadiazole, imidazole, triazole, pyrazine, pyrimidine, pyridazine, triazine, tetrazine, pentazine, indole, isoindole, indolizine, benzimidazole, benzoxazole, benzothiazole, carbazole, purine, quinoline, isoquinoline, quinazoline, phthalazine, cinnoline, and quinoxaline, and
wherein the hydrophobic group is one or more groups selected from the group consisting of a silyl group, and a siloxane group.

A second aspect of the present invention is a surface treatment method including bringing the surface treatment liquid with a surface of a treatment target into contact according to the first aspect.

### Effects of the Invention

The present invention can provide a surface treatment liquid capable of successfully making a surface of a treatment target hydrophilic or hydrophobic even without including resin having a coating film formation property, and provide a surface treatment method using such a surface treatment liquid.

### PREFERRED MODE FOR CARRYING OUT THE INVENTION

### <<Surface treatment liquid>>

A surface treatment liquid includes a resin (A), and a solvent (C). The resin (A) has a predetermined functional group, and includes a predetermined constituent unit. Hereinafter, essential or optional components included in a treatment liquid are described.

### <Resin (A)>

A surface treatment liquid includes a resin (A) as a component for obtaining a desired surface treatment effect. The resin (A) includes a functional group I that is a nitrogen-containing heterocyclic group and a functional group II that is a functional group other than the functional group I and is one or more groups selected from hydrophilic groups and hydrophobic groups. The resin (A) includes a constituent unit (a1) that has the functional group I, and one or more constituent units selected from the group consisting of a constituent unit (a2) that has a cationic group in a side chain and a constituent unit (a3) that has an anionic group in a side chain,
wherein, in the constituent unit (al) having the functional group I, when the functional group I is in the side chain and the nitrogen-containing heterocyclic group as the functional group I is a functional group that can be made to be cationic, the resin (A) may not need to have a constituent unit (a2) in addition to the constituent unit (al), and when an anionic group selected from a phenolic hydroxyl group or a carboxy group is included in the constituent unit (al) that has the functional group I, the resin (A) need not include the constituent unit (a3) in addition to the constituent unit (a1),
wherein the hydrophilic group is an anionic group or a cationic group,
wherein the cationic group is selected from a functional group consisting of a cation and a counter anion, and a functional group that can be made to be cationic, and the anionic group is selected from a functional group consisting of an anion and counter cation, and a functional group that can be made to be anionic, and
wherein the compound giving a nitrogen-containing heterocyclic group is at least one compound selected from the group consisting of pyrrole, oxazole, isoxazole, oxadiazole, thiazole, isothiazole, thiadiazole, imidazole, triazole, pyrazine, pyrimidine, pyridazine, triazine, tetrazine, pentazine, indole, isoindole, indolizine, benzimidazole, benzoxazole, benzothiazole, carbazole, purine, quinoline, isoquinoline, quinazoline, phthalazine, cinnoline, and quinoxaline, and
wherein the hydrophobic group is one or more groups selected from the group consisting of a silyl group, and a siloxane group.

Use of the surface treatment liquid containing the resin (A) that satisfies such requirements makes the surface of the treatment target formed of various materials hydrophilic or hydrophobic satisfactorily.

The reason why the use of the surface treatment liquid containing the resin (A) provides excellent surface treatment effect is not clear. However, it is considered that when the resin (A) includes a combination of a functional group I that is a nitrogen-containing heterocyclic group according to the invention, and at least one of a cationic group in the constituent unit (a2) and an anionic group in the constituent unit (a3) according to the invention, the interaction between the functional group I and at least one of the cationic group and the anionic group promotes the attachment or binding of the resin (A) to the surface of treatment target, and as a result an excellent surface treatment effect can be obtained.

Types of the resin (A) are not particularly limited as long as the resin (A) has a predetermined functional group according to the invention, and is soluble to a solvent (C). Examples of the resin (A) include (meth)acrylic resin, novolac resin, polyester resin, polyamide resin, polyimide resin, polyamide-imide resin, silicone resin, and the like. Among such resin, (meth)acrylic resin is preferable because of easiness in insertion of a functional group, and adjustment of the content ratio of units each having a functional group.

### [Functional group I]

As mentioned above, the functional group I is a nitrogen-containing aromatic heterocyclic group, selected from the group consisting of pyrrole, oxazole, isoxazole, oxadiazole,thiazole, isothiazole, thiadiazole, imidazole, triazole, pyrazine, pyrimidine, pyridazine, triazine, tetrazine, pentazine, indole, isoindole, indolizine, benzimidazole, benzoxazole, benzothiazole, carbazole, purine, quinoline, isoquinoline, quinazoline, phthalazine, cinnoline, and quinoxaline. The functional group I may be present in a main chain of the resin (A), or in the side chain. It is preferable that the functional group I is preferably in the side chain of the resin (A), and more preferably in the terminal of the side chain from the viewpoint that the functional group I is easily brought into contact with the surface of the treatment target, and an excellent surface treatment effect can be easily obtained.

The nitrogen-containing heterocyclic group may be a monovalent group or a polyvalent group of divalent or more in accordance with the existing position in the resin (A). As mentioned above, the nitrogen-containing heterocyclic group is preferably at the end of the side chain in the resin (A). Therefore, the nitrogen-containing heterocyclic group is preferably a monovalent group. The nitrogen-containing heterocyclic group is a group in which hydrogen atom corresponding to the valence is removed from the nitrogen-containing heterocyclic ring. The atomic bonding of the nitrogen-containing heterocyclic group may be bonded to a carbon atom, or may be bonded to heteroatom such as nitrogen atom, which is other than carbon atom.

The nitrogen-containing heterocyclic group may be non-substituted, or may have a substituent. From the viewpoint that the interaction between the surface of the treatment target and the nitrogen-containing heterocyclic group favorably occurs, the nitrogen-containing heterocyclic group is preferably non-substituted. In the nitrogen-containing heterocyclic group, the substituent may be bonded to a carbon atom or may be bonded to a hetero atom such as a nitrogen atom. Examples of the substituents which the nitrogen-containing heterocyclic group may include an alkyl group having 1 to 6 carbon atoms, an alkoxy group having 1 to 6 carbon atoms, a saturated aliphatic acyl group having 2 to 7 carbon atoms, an alkoxy carbonyl group having 2 to 7 carbon atoms, an a saturated aliphatic acyloxy having 2 to 7 carbon atoms, a monoalkyl amino group including an alkyl group having 1 to 6 carbon atoms, a dialkyl amino group including an alkyl group having 1 to 6 carbon atoms, a hydroxy group, halogen, a nitro group, a cyano group, and the like.

### [Functional group II]

The resin (A) has a functional group II that is a hydrophilic group or a hydrophobic group, wherein the hydrophilic group is an anionic group or a cationic group, wherein the cationic group is selected from a functional group consisting of a cation and a counter anion, and a functional group that can be made to be cationic, and the anionic group is selected from a functional group consisting of an anion and counter cation, and a functional group that can be made to be anionic, and wherein the hydrophobic group is one or more groups selected from the group consisting of a silyl group, and a siloxane group. The functional group II may be present in a main chain or in a side chain of the resin (A). The functional group II is preferably in the side chain of the resin (A) from the viewpoint that a good surface treatment effect is easily obtained, and more preferably at a terminal of the side chain.

The functional group II is a group other than the functional group I according to the invention. When a surface treatment liquid including a resin (A) including a hydrophilic group is used, hydrophilizing treatment can be carried out. When treatment liquid including resin (A) including a hydrophobic group is used, hydrophobization treatment can be carried out.

Specific examples of the hydrophilic group include a polyoxyalkylene group (for example, a polyoxyethylene group, a polyoxypropylene group, a polyoxyalkylene group in which an oxyethylene group is block-bonded or randomly-bonded to an oxypropylene group, and the like), an amino group, a quaternary ammonium salt group, a carboxy group, a hydroxyl group, a phosphonic acid group, a phosphinic acid group, a sulfonic acid group, and the like. Furthermore, an organic group including these groups is preferable as the hydrophilic group.

Preferable examples of the silyl group include groups represented by the formula (A3) to be described later, wherein n is 0. Specific examples of the silyl group include a trimethylsilyl group, a triethyl silyl group, a tripropyl silyl group, a triisopropyl silyl group, a tert-butyl dimethyl silyl group, a triphenyl silyl group, and the like. Preferable examples of the siloxane group include groups represented by the formula (A3) to be described later, wherein n is 1 or more.

From the viewpoint that an excellent hydrophilic effect is achieved, as the hydrophilic group, a group represented by the following formula (A5):

-NH-R¹ ... (A5)

(in the formula (A5), R¹ represents an alkyl group having 1 to 4 carbon atoms substituted with one or more groups selected from the group consisting of an amino group, a sulfonic acid group and a hydroxyl group, or a hydrogen atom)
is preferable.

Specific examples of the hydrophilic group represented by formula (A5) include an amino group and groups represented by the following formulae as R¹.

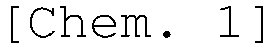

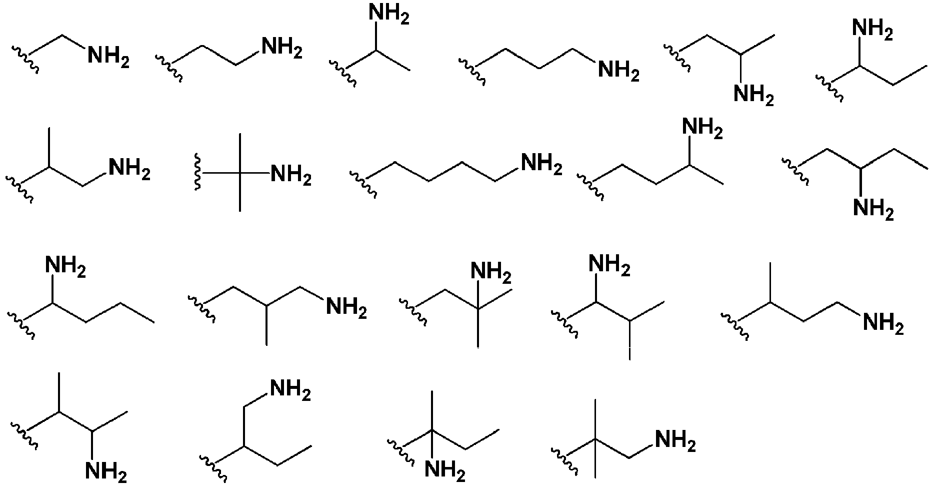

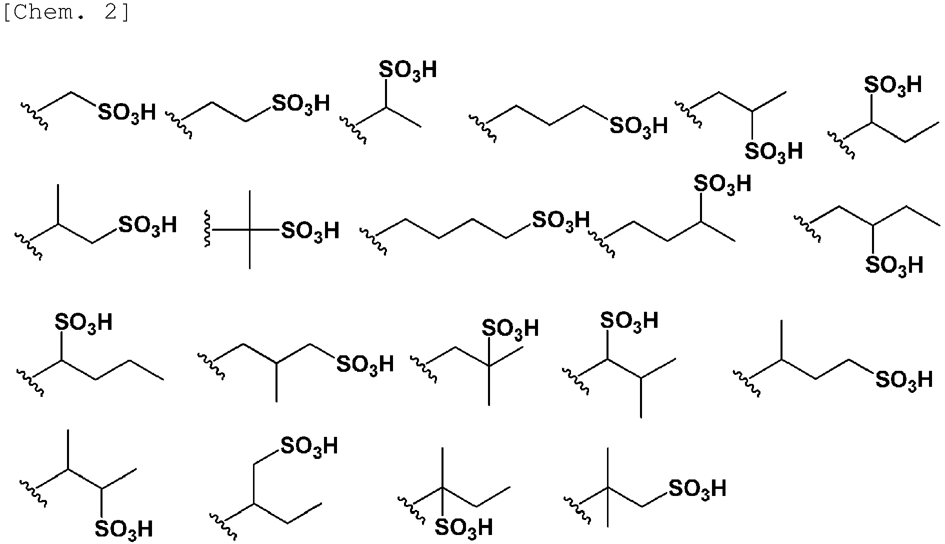

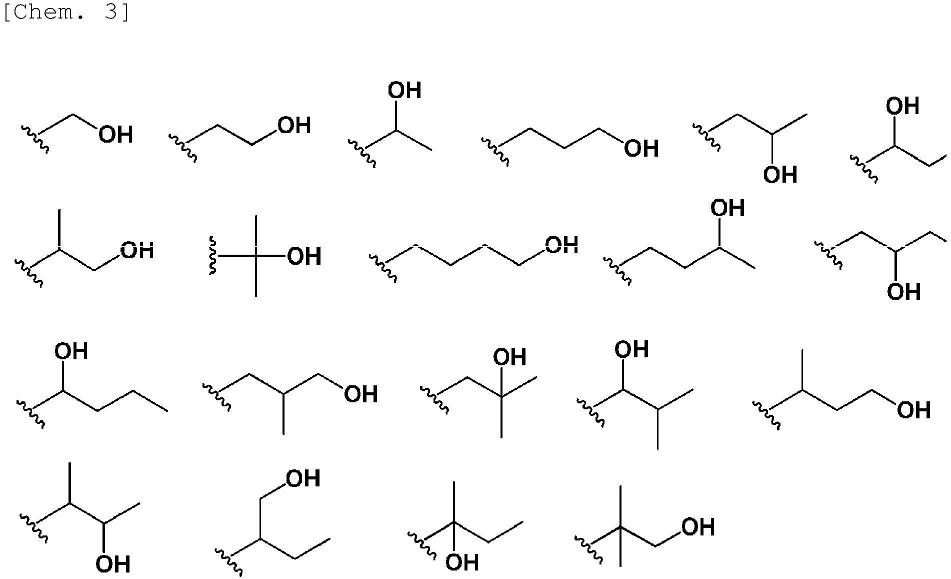

Among the specific examples of R¹ in the hydrophilic groups represented by the above-described formula (A5), the following groups are preferable.

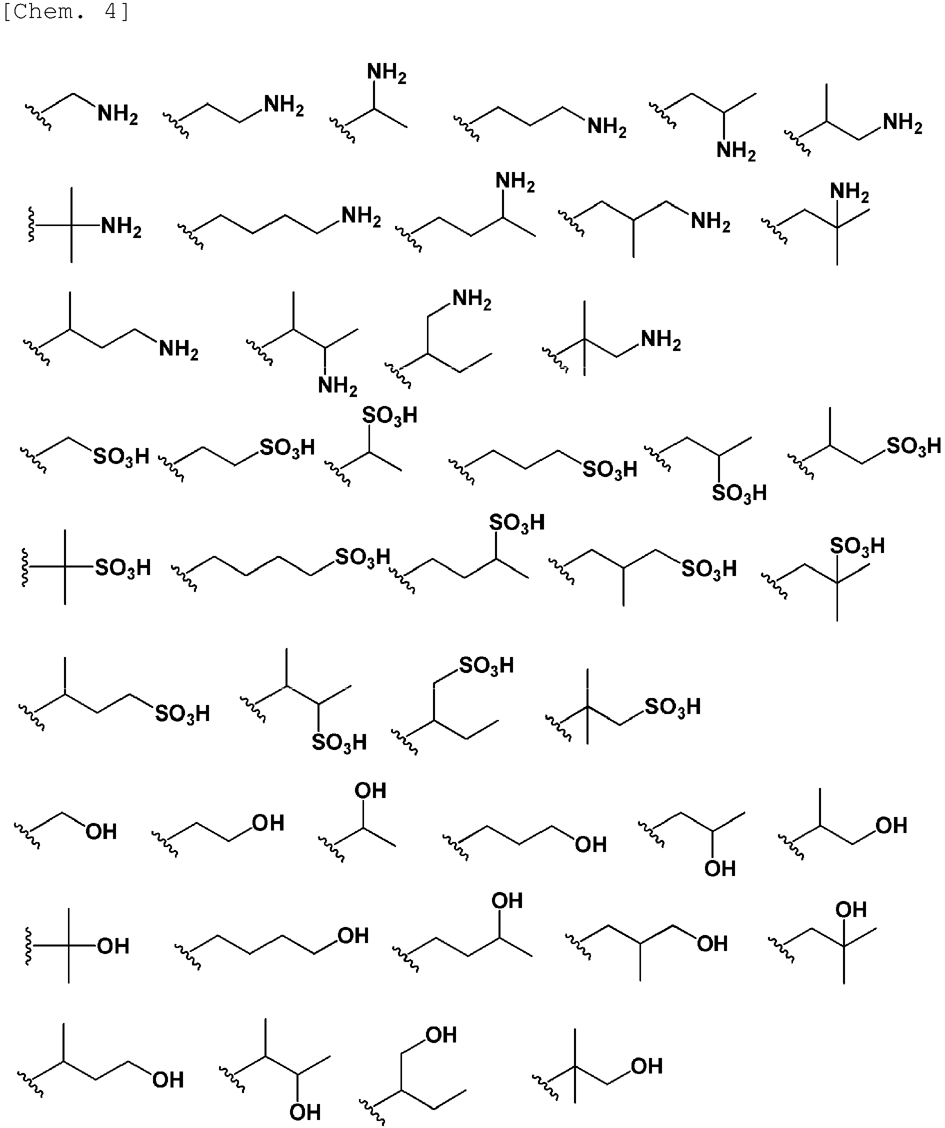

Among the hydrophilic groups represented by the above-described formula (A5), the following groups are particularly preferable.

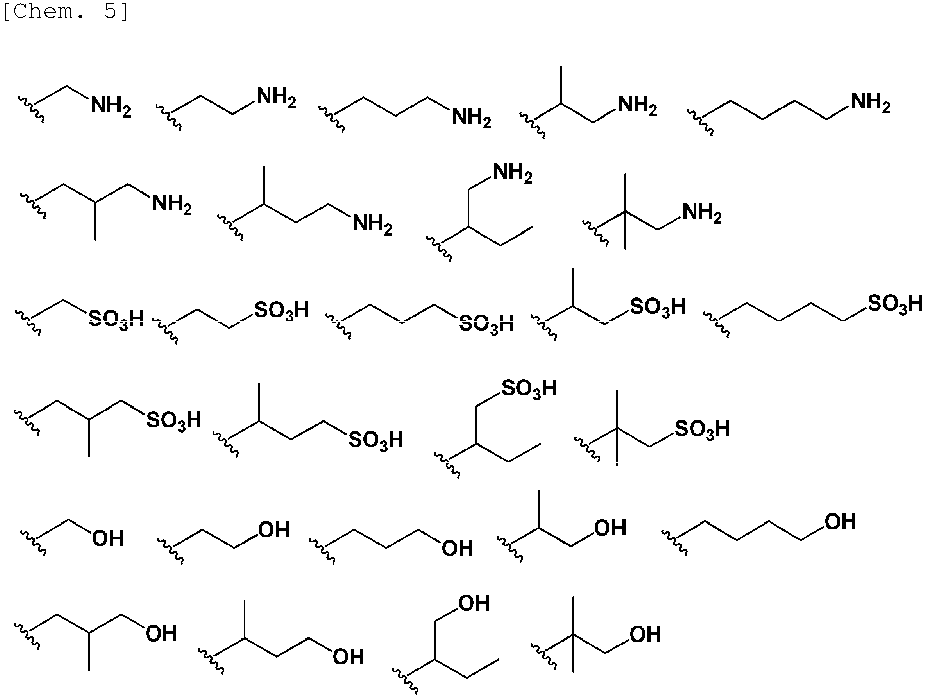

When the resin (A) has a hydrophobic group as the functional group II, the functional group II is preferably derived from the monomer represented by the following formula (A6) :

CH₂=CR²-(CO-O)ₐ-R³··· (A6)

(in the formula (A6), R² is a hydrogen atom or a methyl group, a is 0 or 1, and R³ is a group represented by the following formula (A7):

-SiR⁴R⁵-(-O-SiR⁴R⁵-)ₙ-R⁶··· (A7)

wherein R⁴, R⁵, and R⁶ are, each independently, a hydrocarbon group having 1 to 6 carbon atoms, and n is an integer of 0 or more).

In the formula (A6), when R³ is a group represented by the formula (A7), it is preferable that R⁴, R⁵, and R⁶ are, each independently, a methyl group, an ethyl group, or a phenyl group, and more preferable that all of R⁴, R⁵, and R⁶ are a methyl group. In the formula (A7), the upper limit of n is not particularly limited within a range in which the object of the present invention is not impaired. "n" is preferably an integer of 0 ore more and 35 ore less, and more preferably an integer 0 or more and 10 or less.

Particularly preferable specific examples of the unit having a hydrophobic group derived from a monomer represented by the formula (A6) include the units of the following a6-17 to a6-18. In the following units, unit a6-18 is more preferable.

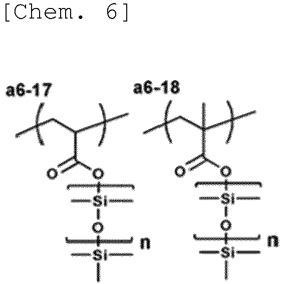

Furthermore, when the resin (A) has a hydrophilic group as the functional group II, the functional group II is preferably derived from a monomer represented by the following formula (A8):

CH₂=CR²-CO-NH-R¹ ... (A8)

(in the formula (A8), R¹ is an alkyl group having 1 to 4 carbon atoms substituted with one or more groups selected from the group consisting of an amino group, a sulfonic acid group, and a hydroxyl group, or a hydrogen atom; and R² is a hydrogen atom or a methyl group).

In the formula (A8), R¹ is the same as described above.

Particularly preferable specific examples of the unit having a hydrophilic group derived from a monomer represented by the formula (A8) include the following units a8-1 to a8-5. Among the units, units a8-1 to a8-4 are more preferable.

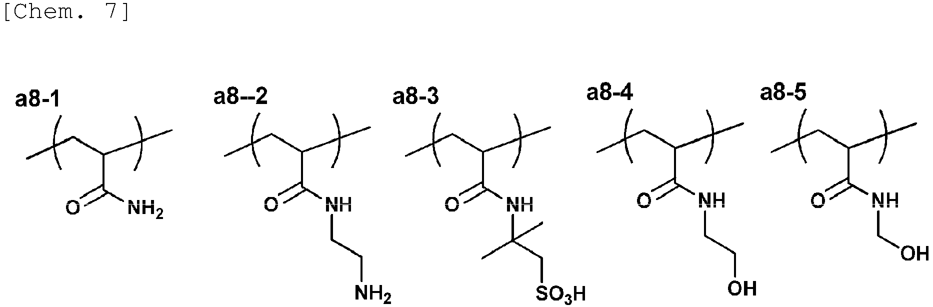

Note here that when the monomer represented by the formula (A8) includes, as R¹, a hydrogen atom or an alkyl group having 1 to 4 carbon atoms substituted with an amino group, a constituent unit derived from the monomer represented by the formula (A8) corresponds to the constituent unit (a2) that has the below-mentioned cationic group in a side chain. When the monomer represented by the formula (A8) includes, as R¹, an alkyl group having 1 to 4 carbon atoms substituted with a sulfonic group, a constituent unit derived from the monomer represented by the formula (A8) corresponds to the constituent unit (a3) that has the below-mentioned anionic group in a side chain.

The content of the constituent unit having a hydrophilic group or a hydrophobic group, which is a unit other than the constituent unit (a1) mentioned below in the resin (A), is preferably 30 mol% or more, more preferably 40 mol% or more, and particularly preferably 50 mol% or more in the resin (A). When the resin (A) is within such a range, and includes a hydrophilic group or a hydrophobic group that is a unit other than the constituent unit (a1), a desired effect of making hydrophilic or hydrophobic can be easily obtained.

### [Constituent unit (a1), constituent unit (a2), constituent unit (a3), and constituent unit (a4)]

The resin (A) includes one or more constituent unit selected from the group consisting of a constituent unit (a1) that has the functional group I, a constituent unit (a2) that has a cationic group in a side chain, and a constituent unit (a3) that has an anionic group in a side chain. These constituent units are a constituent unit promoting the binding of resin (A) to a surface of the treatment target. Note here that the resin (A) may include a constituent unit (a4) other than the constituent unit (a1), the constituent unit (a2), and the constituent unit (a3).

Since the resin (A) essentially includes the functional group I, it essentially includes the constituent unit (a1). When the resin (A) includes one or more constituent units selected from the group consisting of a constituent unit (a1) that has the functional group I, a constituent unit (a2) that has a cationic group in a side chain, and a constituent unit (a3) that has an anionic group in a side chain in combination, an excellent surface treatment effect that the resin (A) is easily adsorbed or bonded to the surface of the treatment target although the reason therefore is not clear.

Note here that in the constituent unit (a1) that has the functional group I, when the functional group I is in the side chain and the nitrogen-containing heterocyclic group as the functional group I is a functional group that can be made to be cationic, the constituent unit (a1) also corresponds to the constituent unit (a2) that has a cationic group in a side chain. In this case, the resin (A) is regarded to include the constituent unit (a1) and the constituent unit (a2), and the resin (A) may not need to have a constituent unit (a2) in addition to the constituent unit (a1). Furthermore, the constituent unit (a1) that has the functional group I may include anionic groups such as a phenolic hydroxyl group and a carboxy group. In this case, the constituent unit (a1) also corresponds to a constituent unit (a3) that has an anionic group in a side chain. In this case, the resin (A) is regarded to include the constituent unit (a1) and the constituent unit (a3), and the resin (A) need not include the constituent unit (a3) in addition to the constituent unit (a1).

### (Constituent unit (a1))

The constituent unit (a1) is not particularly limited as long as it is a constituent unit having a functional group I that is a nitrogen containing heterocyclic group according to the invention. The resin (A) may include two or more types of constituent units (a1) in combination.

The resin (A) is preferably a polymer of monomer having an unsaturated double bond.

Suitable specific examples of the constituent unit (a1) mentioned above include the following constituent units a1-1, a1-2, a1-7, a1-8 and a1-9. Among these constituent units, constituent unit a1-1 is preferable because a monomeric compound is easily available and excellent surface treatment effect is easily obtained.

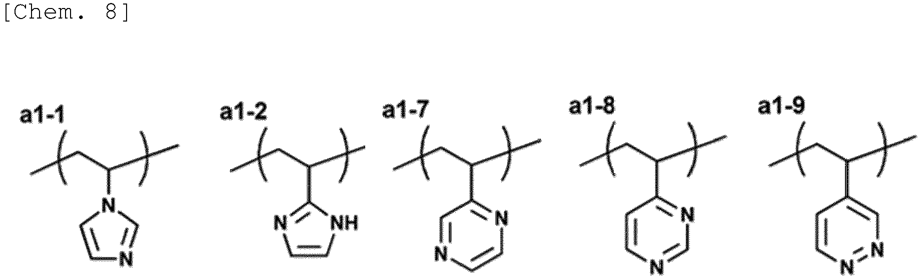

### (Constituent unit (a2))

A constituent unit (a2) is a constituent unit that has a cationic group in a side chain. A constituent unit (a1) having a functional group I that is a nitrogen-containing heterocyclic group in a side chain also corresponds to the constituent unit having a cationic group in the side chain. Herein, however, in the constituent unit (a2), constituent units that do not correspond to the constituent unit (a1) are descried. The constituent unit (a2) is not particularly limited as long as it is a constituent unit having a cationic group in the side chain. The resin (A) may include two or more types of constituent units (a2) in combination.

The cationic group is not necessarily a functional group composed of a cation and a counter anion, and is not particularly limited as long as it is a functional group that can be made cationic. As cations derived from the cationic group, cations including N⁺, C⁺, B⁺, P⁺, and the like, are preferable, and a cation including N⁺ is more preferable. As the cationic group, because a monomer for generating a constituent unit (a2) is easily available or an excellent surface treatment effect is easily obtained, a cyclic or acyclic amino group or a quaternary ammonium salt group are preferable.

Note here that the cationic group often acts as a hydrophilic group, but does not necessarily act as a hydrophilic group. For example, cationic groups derived from cationic compounds, such as imidazole, and pyrimidine, which are freely mixed with water, or soluble to water at room temperature (for example, 1 g or more thereof is dissolved in 100 g of water) act as a hydrophilic group. On the other hand, cationic groups derived from cationic compounds, such as quinoline, which are hardly dissolved in water at room temperature (for example, less than 1 g thereof is dissolved in 100 g of water) act as a hydrophobic group.

As the resin (A), a polymer of a monomer having an unsaturated double bond is preferable. As the constituent unit (a2), a constituent unit derived from a compound represented by the following formula (A2) is preferable.

CH₂=CR²-(CO)ₐ-R¹⁰ ... (A2)

(in the formula (A2), R² is a hydrogen atom or a methyl group, R¹⁰ is a group represented by -Y-R¹¹-R¹², or an amino group optionally substituted with a hydrocarbon group having 1 to 6 carbon atoms, Y is -O-, or -NH-, R¹¹ is a divalent organic group which may have substituent, R¹² is an amino group optionally substituted with a hydrocarbon group having 1 to 6 carbon atoms, or a quaternary ammonium salt group represented by -N⁺R¹³R¹⁴R¹⁵·Z⁻, R¹³, R¹⁴, and R¹⁵ are each independently a hydrogen atom, or a hydrocarbon group having 1 to 6 carbon atoms, Z⁻ is a counter anion, and a is 0 or 1.)

In the above formula (A2), R¹⁰ is a group represented by -Y-R¹¹-R¹², and R¹¹ is a divalent organic group which may have a substituent. The divalent organic group is not particularly limited, and a divalent hydrocarbon group is preferable. The number of carbon atoms of the divalent hydrocarbon group is not particularly limited as long as the purpose of the present invention is not impaired. Because the resin (A) is easily obtained or prepared, when R¹¹ is a divalent organic group, the number of carbon atoms of the divalent hydrocarbon group is preferably 1 to 20, more preferably 1 to 12, particularly preferably 1 to 10, and most preferably 1 to 6.

The divalent hydrocarbon group as R¹¹ may be an aliphatic group, an aromatic group, or a hydrocarbon group including an aliphatic moiety and an aromatic moiety. When the divalent hydrocarbon group is an aliphatic group, the aliphatic group may be a saturated aliphatic group or an unsaturated aliphatic group. Furthermore, a structure of the aliphatic group may be linear, branched or cyclic, or a combination of these structures.

Specific suitable examples of R¹¹ include a methylene group, an ethane-1,2-diyl group, an ethane-1,1-diyl group, a propane-1,3-diyl group, a propane-1,1-diyl group, a propane-2,2-diyl group, an n-butane-1,4-diyl group, an n-pentane-1,5-diyl group, an n-hexane-1,6-diyl group, an n-heptane-1,7-diyl group, an n-octane-1,8-diyl group, an n-nonane-1,9-diyl group, an n-decane-1,10-diyl group, an o-phenylene group, an m-phenylene group, a p-phenylene group, a naphthalene-2,6-diyl group, a naphthalene-2,7-diyl group, a naphthalene-1,4-diyl group, a biphenyl -4,4'-diyl group, and the like.

When the divalent hydrocarbon group as R¹¹ has a substituent, examples of the substituent include a hydroxyl group, an alkoxy group having 1 to 6 carbon atoms, an aliphatic acyl group having 2 to 6 carbon atoms, a halogen atom, a nitro group, a cyano group, and the like.

When R¹⁰ and R¹² are an amino group optionally substituted with a hydrocarbon group having 1 to 6 carbon atoms, suitable specific examples thereof include an amino group, a methyl amino group, an ethyl amino group, an n-propyl amino group, an isopropyl amino group, an n-butyl amino group, an n-pentyl amino group, an n-hexyl amino group, a phenyl amino group, a dimethyl amino group, a diethyl amino group, a di-n-propyl amino group, a diisopropyl amino group, a di-n-butyl amino group, a di-n-pentyl amino group, a di-n-hexyl amino, and diphenyl amino group.

When R¹² is a quaternary ammonium salt group represented by -N⁺R¹³R¹⁴R¹⁵·Z⁻, R¹³, R¹⁴, and R¹⁵ are each independently a hydrogen atom, or a hydrocarbon group having 1 to 6 carbon atoms, Z⁻ is a counter anion. Suitable examples of the hydrocarbon group having 1 to 6 carbon atoms include a methyl group, an ethyl group, an n-propyl group, an isopropyl group, an n-butyl group, an n-pentyl group, an n-hexyl group, and a phenyl group. The counter anion as Z⁻ is not particularly limited as long as it is a monovalent anion, and a halide ion is preferable. Suitable examples of the halide ion include a chloride ion, bromide ion, and an iodide ion.

Suitable specific examples of the above-described constituent unit (a2) include the below-mentioned constituent units a2-1 to a2-50. Among these constituent units, constituent units a2-1 to a2-4, a2-17, and a2-18 are preferable because a monomeric compound is easily available and excellent surface treatment effect is easily obtained.

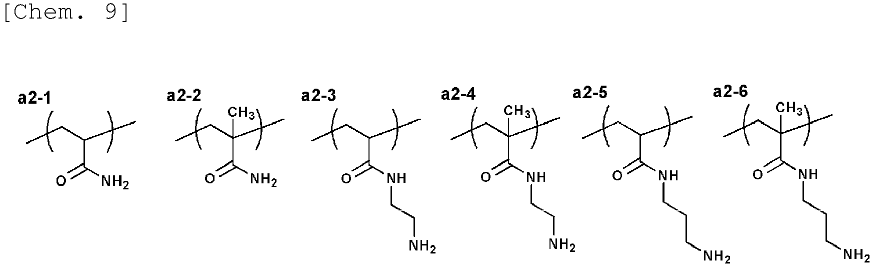

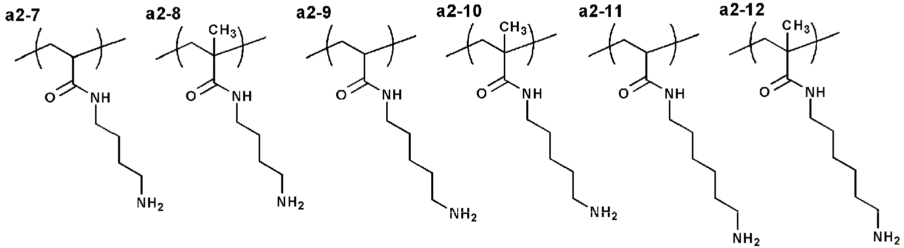

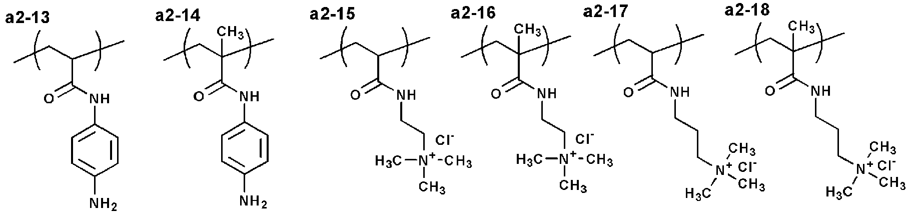

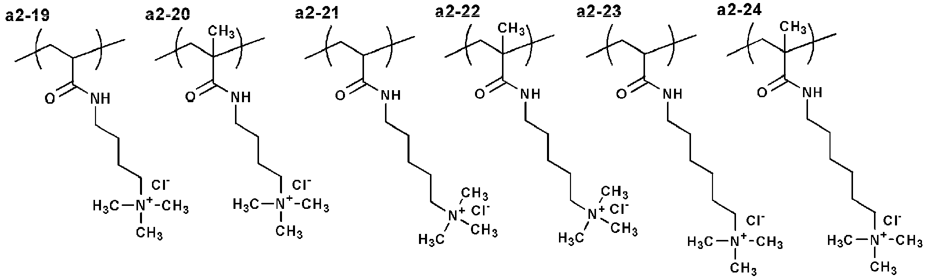

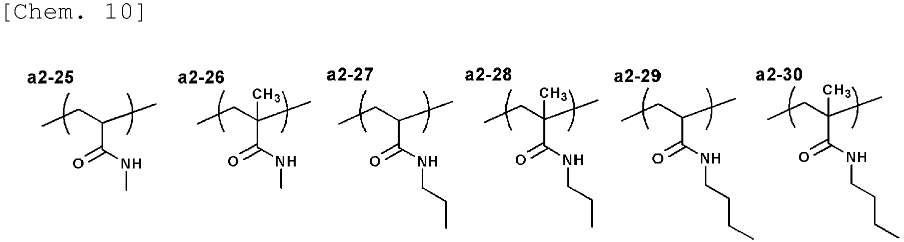

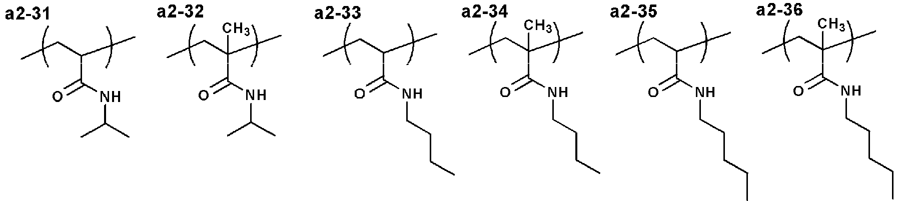

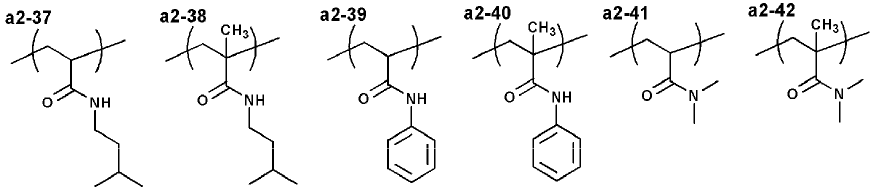

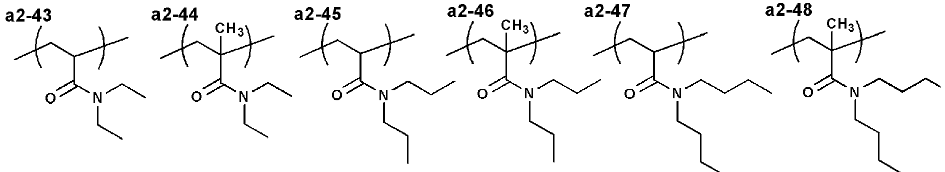

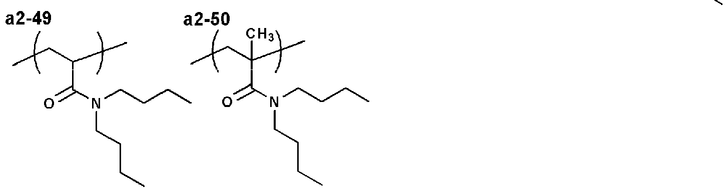

### (Constituent unit (a3))

A constituent unit (a3) is a constituent unit that has an anionic group in a side chain. The constituent unit (a3) is not particularly limited as long as it is a constituent unit having an anionic group in the side chain. The resin (A) may include two or more types of constituent units (a3) in combination.

The anionic group is not necessarily a functional group composed of an anion and a counter cation, and is not particularly limited as long as it is a functional group that can be made anionic. The anionic group is typically a functional group showing Brønsted acidic property. Suitable examples of the functional group showing Brønsted acidic property include a carboxy group, a sulfonic group, a sulfinic acid group, a phosphonic acid group, a phosphinic acid group, and a phenolic hydroxyl group.

These Brønsted acidic groups may form a salt together with a counter cation. The counter cation is not particularly limited and it may be an organic cation, or an inorganic cation such as a metal ion. A metal ion is preferable. As the metal ion, an alkali metal ion is preferable, and, for example, Li+, Na+, K+, and Sr+ are preferable.

Note here that the above-described anionic group is usually acts like a hydrophilic group.

The resin (A) is preferably a polymer of monomer having an unsaturated double bond. The constituent unit (a3) is preferably a constituent unit derived from the compound represented by the following formula (A3).

CH₂=CR²-(CO)_{b}-R¹⁷ ... (A3)

(in the formula (A3), R² is a hydrogen atom or a methyl group, R¹⁷ is a hydroxyl group, or a group represented by -A-R¹⁸-R¹⁹, A is -O-, or -NH-, R¹⁸ is a divalent organic group which may have a substituent, R¹⁹ is a Brønsted acidic group, b is 0 or 1, where b is 0, R¹⁷ is not a hydroxyl group.)

In the formula (A3), R¹⁷ is a group represented by-A-R¹⁸-R¹⁹, R¹⁸ is a divalent organic group which may have a substituent. The divalent organic group is not particularly limited, but a divalent hydrocarbon group is preferable. The number of carbon atoms of the divalent hydrocarbon group is not particularly limited as long as the purpose of the present invention is not impaired. Because the resin (A) is easily obtained or prepared, when R¹⁸ is a divalent hydrocarbon group, the number of carbon atoms of the divalent hydrocarbon group is preferably 1 to 20, more preferably 1 to 12, particularly preferably 1 to 10, and the most preferably 1 to 6.

The divalent hydrocarbon group as R¹⁸ may be an aliphatic group, an aromatic group, and a hydrocarbon group including an aliphatic moiety and an aromatic moiety. When the divalent hydrocarbon group is an aliphatic group, the aliphatic group may be a saturated aliphatic group or an unsaturated aliphatic group. Furthermore, a structure of the aliphatic group may be a linear, branched, or cyclic, or a combination of these structures.

Specific examples of R¹⁸ include a methylene group, an ethane-1,2-diyl group, an ethane-1,1-diyl group, a propane-1,3-diyl group, a propane-1,1-diyl group, a propane-2,2-diyl group, an n-butane-1,4-diyl group, an n-pentane-1,5-diyl group, an n-hexane-1,6-diyl group, an n-heptane-1,7-diyl group, an n-octane-1,8-diyl group, an n-nonane-1,9-diyl group, an n-decane-1,10-diyl group, an o-phenylene group, an m-phenylene group, a p-phenylene group, a naphthalene-2,6-diyl group, a naphthalene-2,7-diyl group, a naphthalene-1,4-diyl group, a biphenyl -4,4'-diyl group, and the like.

When the divalent hydrocarbon group as R¹⁸ has a substituent, examples of the substituent include a hydroxyl group, an alkoxy group having 1 to 6 carbon atoms, an aliphatic acyl group having 2 to 6 carbon atoms, a halogen atom, a nitro group, a cyano group, and the like.

As the Brønsted acidic group as R¹⁹, a carboxy group, a sulfonic group, a sulfinic acid group, a phosphonic acid group, a phosphinic acid group, and a phenolic hydroxyl group are preferable, and a carboxy group, a sulfonic group, a phosphonic acid group, and a phenolic hydroxyl group are more preferable.

When R¹⁹ is not a phenolic hydroxyl group, as a group represented by -R¹⁸-R¹⁹, the following groups are preferable. In the following structural formulae, R¹⁹ is a Brønsted acidic group other than a phenolic hydroxyl group.

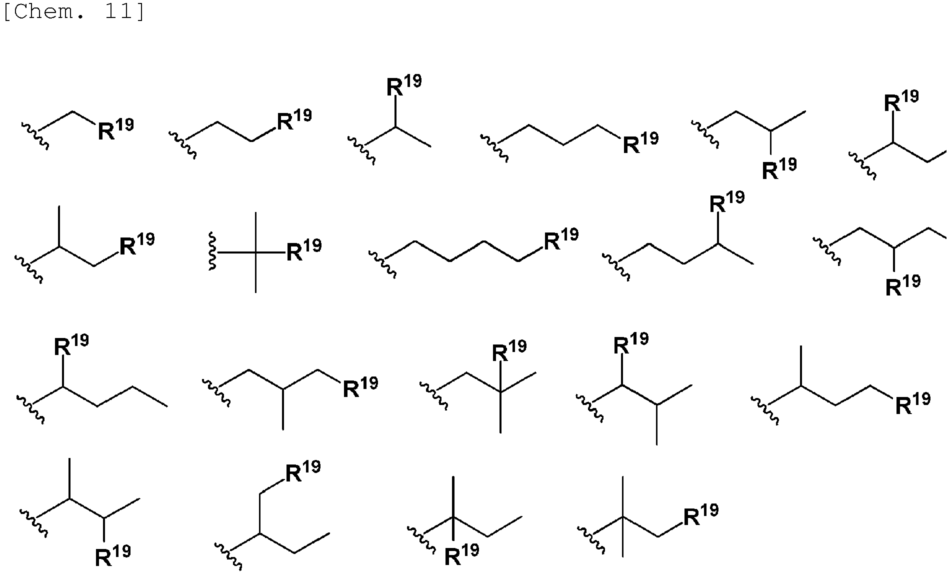

Suitable specific examples of the above-described constituent unit (a3) include the below-mentioned constituent units a3-1 to a3-20. Among these constituent units, constituent units a3-1 to a3-10, a3-19, and a3-20 are preferable because a monomeric compound is easily available and excellent surface treatment effect is easily obtained.

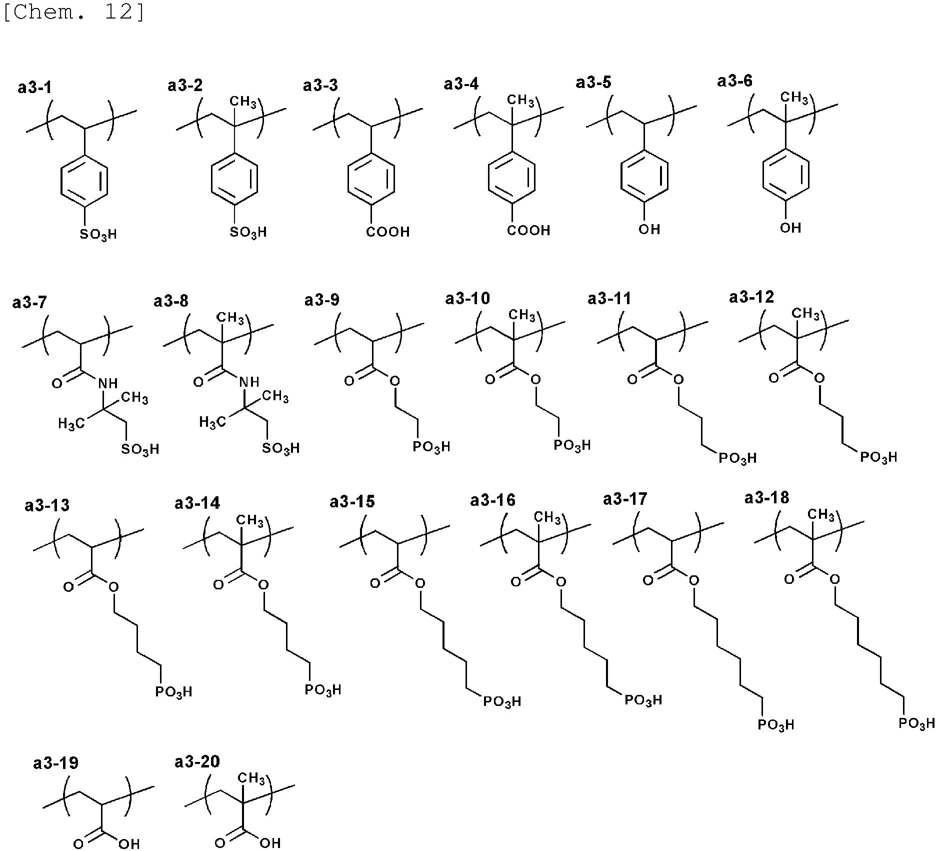

### (Constituent unit (a4))

The resin (A) may include a constituent unit (a4) other than the constituent unit (a1), constituent unit (a2), and constituent unit (a3) described above as long as the purpose of the present invention is not impaired. The resin (A) may include a combination of two types of or more of constituent units (a4) in combination.

As described above, as the resin (A), a polymer of monomer having an unsaturated double bond is preferable. In this case, examples of the constituent unit (a4) include constituent units derived from monomers such as methyl(meth)acrylate, ethyl(meth)acrylate, isopropyl(meth)acrylate, n-propyl(meth)acrylate, n-butyl(meth)acrylate, isobutyl(meth)acrylate, tert-butyl(meth)acrylate, n-pentyl (meth)acrylate, isopentyl(meth)acrylate, phenyl(meth)acrylate, styrene, α-methyl styrene, β-methyl styrene, o-methyl styrene, m-methyl styrene, p-methyl styrene, and chlorostyrene. Furthermore, hydrophilic group or a hydrophobic group that does not correspond to the functional group I, anionic group, and cationic group, and a compound having an unsaturated double bond are also suitable as a monomeric compound providing a constituent unit (a4).

An amount of the constituent unit (a1) with respect to the total constituent unit in the resin (A) is preferably 2 mol% or more, more preferably 3 mol% or more, and particularly preferably 5 mol% or more. A sum of the amount of the constituent unit (a1) and the amount of the constituent unit (a2) with respect to the total constituent unit in the resin (A) is preferably 70 to 100 mol% or 2 to 30 mol%, and more preferably 80 to 100 mol% or 5 to 20 mol%. When the sum of the amount of the constituent unit (a1) and the amount of the constituent unit (a2) with respect to the total constituent unit in the resin (A) is preferably 70 to 100 mol%, the amount of the constituent unit (a3) is preferably 0 to 30 mol%, and more preferably 0 to 20 mol%. When the sum of the amount of the constituent unit (a1) and the amount of the constituent unit (a2) with respect to the total constituent unit in the resin (A) is 2 to 30 mol%, the amount of the constituent unit (a3) is preferably 70 to 98 mol%, and more preferably 80 to 95 mol%.

The mass average molecular weight of the resin (A) is not particularly limited as long as the purpose of the present invention is not impaired. From the viewpoint of solubility in the surface treatment liquid and easiness of obtaining desired surface treatment effect, the mass average molecular weight of the resin (A) is preferably 50,000 to 3,000,000, and more preferably 50,000 to 2,000,000. Note here that the mass average molecular weight of the resin (A) is a molecular weight in terms of polystyrene measured by GPC.

The content of the resin (A) in the surface treatment liquid is not particularly limited as long as the purpose of the present invention is not impaired. From the viewpoint that excessive attachment of the resin (A) to the surface of the treatment target is prevented and desired surface treatment effect is easily obtained, the content of the resin (A) in the surface treatment liquid is preferably 0.1 to 10 mass%, more preferably 0.2 to 7 mass%, and particularly preferably 0.5 to 5 mass%.

### <Strong acid (B)>

A surface treatment liquid may include strong acid (B). The strong acid (B) has a pKa of 1 or less. Note here that the pKa is a value in water. The strong acid (B) promotes attachment or bonding of the resin (A) to a surface of a treatment target. Types of the strong acid (B) are not particularly limited as long as they have a pKa of 1 or less. As the strong acid (B), it is possible to use two or more acids having a pKa of 1 or less in combination.

Preferable examples of the strong acid (B) include fluorinated aliphatic carboxylic acid (for example, trifluoroacetic acid, and the like), fluorosulfonic acid, alkane sulfonic acid having 1 to 30 carbon atoms (for example, methane sulfonic acid, dodecane sulfonic acid, and the like), aryl sulfonic acid (for example, benzene sulfonic acid, p-toluene sulfonic acid, and the like), fluoroalkane sulfonic acid having 1 to 30 carbon atoms (for example, trifluoromethane sulfonic acid, pentafluoroethane sulfonic acid, heptafluoropropane sulfonic acid, nonafluorobutane sulfonic acid, undecafluoropentane sulfonic acid, and tridecafluorohexane sulfonic acid), a bis(sulfonyl)imide compound, a cyclic sulfonylimide compound in which two sulphonyl groups are linked to each other by a fluoroalkylene group, N-acyl fluoroalkane sulfonic acid amide, and the like.

When these strong acid (B)s include a fluoroalkyl group or a fluoroalkylene group, such a group may be a partially fluorinated fluoroalkyl group or fluoroalkylene group, a completely fluorinated perfluoroalkyl group or perfluoroalkylene group.

Among these strong acid (B)s, fluorosulfonic acid, alkane sulfonic acid having 1 to 30 carbon atoms, fluoroalkane sulfonic acid having 1 to 30 carbon atoms, bis(fluoroalkylsulphonyl)imidic acid, cyclic sulfone imidic acid in which two sulphonyl groups are linked to each other by a fluoroalkylene group, and N-acyl fluoroalkane sulfonic acid amide are preferable, and fluoroalkane sulfonic acid having 1 to 30 carbon atoms, a bis(sulfonyl)imide compound, a cyclic sulfonylimide compound in which two sulphonyl groups are linked to each other by a fluoroalkylene group, and N-acyl fluoroalkane sulfonic acid amide are preferable.

As fluoroalkane sulfonic acid having 1 to 30 carbon atoms, trifluoromethane sulfonic acid, pentafluoroethane sulfonic acid, heptafluoropropane sulfonic acid, nonafluorobutane sulfonic acid, and the like, are preferable.

As the bis(sulfonyl)imide compound, a compound represented by the following formula (B1) is preferable.

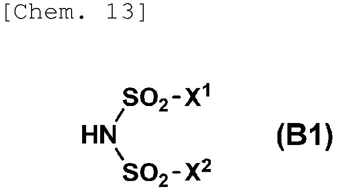

In the formula (B1), X¹ and X², each independently, represent a hydrocarbon group substituted with at least one electron-withdrawing group. The hydrocarbon group may be substituted with various groups other than the electron-withdrawing group within a range in which the strong acidity of the compound represented by the formula (B1) is not impaired. The number of carbon atoms of X¹ and X² is preferably 1 to 20, more preferably 1 to 10, and particularly preferably 1 to 7. As the hydrocarbon group substituted with an electron-withdrawing group, a fluorinated alkyl group and an aryl group having a nitro group are preferable. The fluorinated alkyl group may be linear, branched or cyclic. As the fluorinated alkyl group, a completely fluorinated perfluoroalkyl group is preferable. As the aryl group having a nitro group, an o-nitrophenyl group, an m-nitrophenyl group, and a p-nitrophenyl group are preferable, and a p-nitrophenyl group is more preferable.

Specific examples of the compound represented by formula (B1) include compounds of the following formula.

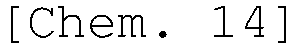

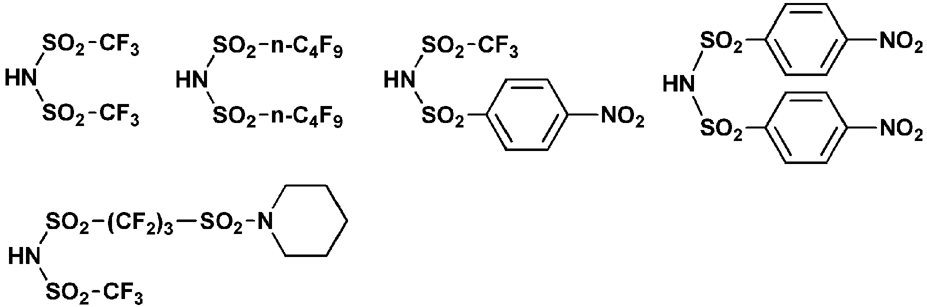

As the cyclic sulfonyl imide compound in which two sulphonyl groups are linked to each other by a fluoroalkylene group, a compound represented by the following formula (B2) is preferable.

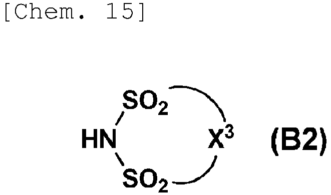

In the formula (B2), X³ represents a linear or branched alkylene group in which at least one hydrogen atom is substituted with a fluorine atom. The number of carbon atoms of X³ is preferably 2 to 6, more preferably 3 to 5, and particularly preferably 3.

Preferable specific examples of the compound represented by formula (B2) include compounds of the following formula.

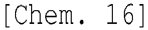

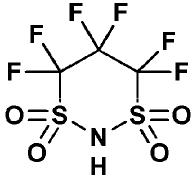

As N-acyl fluoroalkane sulfonic acid amide, a compound represented by the following formula (B3) is preferable.

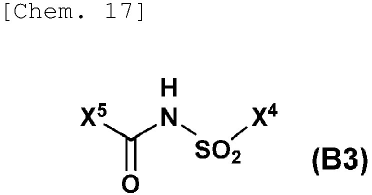

In the formula (B3), X⁴ represents a linear or branched alkyl group in which at least one hydrogen atom is substituted with a fluorine atom. The number of carbon atoms in X⁴ is preferably 1 to 10, more preferably 1 to 7, and particularly preferably 1 to 3. X⁵ is a hydrocarbon group. The hydrocarbon group is similar to the hydrocarbon group constituting a main skeleton of the group of R⁵.

Preferable specific examples of the compound represented by formula (B3) include the compounds of the following formula.

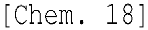

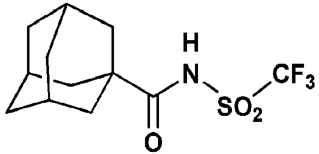

The content of the strong acid (B) in the surface treatment liquid is not particularly limited as long as the surface treatment can be successfully carried out. The content of the strong acid (B) in the surface treatment liquid is preferably 0.1 to 20 parts by mass, more preferably 0.1 to 10 parts by mass, and particularly preferably 0.1 to 5 parts by mass with respect to 100 parts by mass of the resin (A).

### <Solvent (C)>

A solvent (C) is not particularly limited as long as it can dissolve resin (A) and strong acid (B). As long as predetermined amounts of resin (A) and strong acid (B) are dissolved in the surface treatment liquid, the surface treatment liquid may include resin (A) and strong acid (B) which have not been dissolved. It is preferable that resin (A) and strong acid (B) are completely dissolved in the surface treatment liquid. When the surface treatment liquid includes insoluble matter, the insoluble matter may be attached to a surface of a treatment target at the time of surface treatment. In this case, the surface-treated surface of the treatment target is rinsed with a method to be described later, and thereby it is possible to remove the insoluble matter attached to the surface of the treatment target.

The solvent (C) may be water, an organic solvent, or an aqueous solution of an organic solvent. It is preferable that the solvent (C) includes water, and it is more preferable that the solvent (C) is water. The content of water in the solvent (C) is preferably 90 mass% or less, more preferably 80 mass% or less, and particularly preferably 70 mass% or less.

Specific examples of the organic solvent used as the solvent (C) include:
alkanols such as methanol, ethanol, n-propanol, n-butanol, isobutanol, and the like;
sulfoxides such as dimethylsulfoxide;
sulfones such as dimethylsulfone, diethylsulfone, bis(2-hydroxyethyl)sulfone, and tetramethylene sulfone;
amides such as N,N-dimethylformamide, N-methylformamide, N,N-dimethylacetamide, N-methylacetamide, and N,N-dimethylacetamide;
lactams such as N-methyl-2-pyrrolidone, N-ethyl-2-pyrrolidone, N-propyl-2-pyrrolidone, N-hydroxymethyl-2-pyrrolidone, and N-hydroxyethyl-2-pyrrolidone;
imidazolidinones such as 1,3-dimethyl-2-imidazolidinone, 1,3-diethyl-2-imidazolidinone, and 1,3-diisopropyl-2-imidazolidinone;
dialkyl glycol ethers such as dimethyl glycol, dimethyl
diglycol, dimethyl trigylcol, methylethyl diglycol, diethyl glycol, and triethylene glycol butyl methyl ether;
(poly)alkylene glycol monoalkyl ethers such as ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether;
(poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and propylene glycol monoethyl ether acetate;
other ethers such as dimethyl ether, diethyl ether, methylethyl ether, dipropyl ether, diisopropyl ether, dibutyl ether, diisoamyl ether, diethylene glycol dimethyl ether, diethylene glycol methylethyl ether, diethylene glycol diethyl ether, and tetrahydrofuran;
ketones such as acetone, methyl ethyl ketone, cyclohexanone, 2-heptanone, and 3-heptanone;
alkyl lactate esters such as methyl 2-hydroxypropionate and ethyl 2-hydroxypropionate; other esters such as 2-hydroxy-2-methylpropionic acid ethyl, 3-methoxypropionic acid methyl, 3-methoxypropionic acid ethyl, 3-ethoxypropionic acid methyl, 3-ethoxypropionic acid ethyl, ethoxy acetic acid ethyl, hydroxyl acetic acid ethyl, 2-hydroxy-3-methylbutanoic acid methyl, 3-methyl-3-methoxybutyl acetate, 3-methyl-3-methoxybutyl propionate, ethyl acetate, n-propyl acetate, i-propyl acetate, n-butyl acetate, i-butyl acetate, n-pentyl formate, i-pentyl acetate, n-butyl propionate, ethyl butyrate, n-propyl butyrate, i-propyl butyrate, n-butyl butyrate, methyl pyruvate, ethyl pyruvate, n-propyl pyruvate, methyl acetoacetate, ethyl acetoacetate, and ethyl 2-oxobutanoate; lactones such as β-propiolactone, γ-butyrolactone, and δ-pentyrolactone;
linear, branched, or cyclic aliphatic hydrocarbons such as n-hexane, n-heptane, n-octane, n-nonane, methyloctane, n-decane, n-undecane, n-dodecane, 2,2,4,6,6-pentamethyl heptane, 2,2,4,4,6,8,8-heptamethyl nonane, cyclohexane, and methyl cyclohexane;
aromatic hydrocarbons such as benzene, toluene, xylene, 1,3,5-trimethyl benzene, and naphthalene;
terpenes such as p-menthane, diphenyl menthane, limonene, terpinene, bornane, norbornane and pinane; and the like.

### <Other components>

The surface treatment liquid may include various components in addition to the resin (A), the strong acid (B), and the solvent (C) as long as the purpose of the present invention is not impaired. Examples of the other components include a coloring agent, a surface-active agent, a defoaming agent, a viscosity modifier, and the like.

### <Preparation method of surface treatment liquid>

A method for preparing a surface treatment liquid is not particularly limited. The surface treatment liquid can be typically prepared by homogeneously mixing a predetermined amount of the resin (A), and the solvent (C), and the strong acid (B), and other components if necessary.

The above-described treatment liquid is suitably used for, for example, surface treatment for preventing cell adhesion to a cell culture instrument and a micro channel device or the like for circulating a liquid including biological samples such as cells, and surface treatment for the purpose of providing various articles with an antifouling property, an antifog property, or the like.

### <<Surface treatment method>>

The surface treatment method using the above-described surface treatment liquid usually includes applying a surface treatment liquid to a surface of a treatment target. The applying method of the surface treatment liquid is not particularly limited. Specific examples of the applying method include a spin coating method, a spray method, a roller coating method, a dipping method, and the like. When the treatment target is a substrate, since uniform application of the surface treatment liquid allows a surface of the substrate to be uniformly hydrophilic or hydrophobic, a spin coating method is preferable as an applying method.

Material for the surface of the treatment target to which a surface treatment liquid is to be applied is not particularly limited, and the material may be an organic material or an inorganic material. Examples of the organic material include various resin materials including polyester resin such as PET resin and PBT resin; various nylon; polyimide resin; polyamide-imide resin; polyolefin such as polyethylene and polypropylene; polystyrene; (meth)acrylic resin; and the like. Furthermore, photosensitive resin components included in various resist material, and alkali soluble resin components are also preferable as the organic material. Examples of the inorganic material include glass, silicon, and various metal such as copper, aluminum, iron and tungsten. The metal may be an alloy.

Shapes of a treatment target are not particularly limited. The treatment target may be a flat substrate, and may have a three-dimensional shape such as a spherical shape and a columnar shape. Furthermore, the surface of the treatment target may be flat, or may have regular or irregular concavity and convexity.

After the surface treatment liquid is applied to a surface of the treatment target, a coated film may be heated to remove at least part of the solvent (C), if necessary.

A portion of the treatment target on which the surface treatment liquid is applied may be rinsed if necessary. As described above, when the surface treatment liquid including resin (A) having a predetermined functional group is applied on the surface of the treatment target, the resin (A) is successfully attached or bonded to the surface of the treatment target. However, a certain amount of resin (A) has not been attached or bonded to the surface of the treatment target. Therefore, in order to reduce the influence of the resin (A) on the surface property of the treatment target, the resin (A) which has not been attached or bonded to the surface may be washed out by rinsing.

When the surface treatment liquid includes water as the solvent (C), rinsing with water is preferable. Furthermore, when the surface treatment liquid includes an organic solvent as the solvent (C), rinsing with an organic solvent is also preferable. When rinsing with an organic solvent, it is preferable to use an organic solvent of the same type as the organic solvent contained in the surface treatment liquid.

After the surface treatment liquid is applied or rinsed, the surface of the treatment target is dried if necessary, thereby obtaining an article, which has been successfully made hydrophilic or hydrophobic.

Note here that a treatment target is surface-treated with a surface treatment liquid including the resin (A) having a hydrophilic group, even if the treatment target is not dried after surface treatment, the surface of the treatment target is successfully made hydrophilic. Therefore, when the treatment target is surface-treated with a surface treatment liquid including the resin (A) having a hydrophilic group, the surface of the treatment target wetted with the surface treatment liquid can further be treated with a second aqueous treatment liquid other than the surface treatment liquid. In this case, the surface of the treatment target is successfully wetted with the second aqueous treatment liquid, and the surface treatment effect is successfully expressed by the second aqueous treatment liquid.

The second aqueous treatment liquid is not particularly limited as long as it is a treatment liquid including water. Preferable examples of the aqueous treatment liquid include a treatment liquid including a resin (X), a strong acid (Y), and aqueous solvent (Z). As the resin (X), a resin having a functional group α that is one or more groups selected from the group consisting of a hydroxyl group, a cyano group, and a carboxy group, and a functional group β that is a hydrophilic group other than the functional group α is used. However, when the functional group β includes one or more groups selected from a hydroxyl group, a cyano group, and a carboxy group, the resin (X) may not include the functional group α. Use of such a second aqueous treatment liquid can make the surface of the treatment target hydrophilic.

As the strong acid (X), the same acids as in the strong acid (B) described above are used. As the aqueous solvent (Z), water or an aqueous solution of a water-soluble organic solvent can be used. As the water-soluble organic solvent, a water-soluble solvent can be used among the organic solvents exemplified as the solvent (C).

The functional group α of the resin (X) is preferably a group derived from a monomer represented by the following formula (X1):

CH₂=CR^{x1}-(R^{x2})ₐ-CO-R^{x3} ... (X1)

(in the formula (X1), R^{x1} is a hydrogen atom or a methyl group, R^{x2} is a divalent hydrocarbon group, a is 0 or 1, R^{x3} is -OH, - O-R^{x4}, or -NH-R^{x4}, and R^{x4} is a hydrocarbon group substituted with one or more functional groups selected from the group consisting of a hydroxyl group, a cyano group, and a carboxy group) .

In the above formula (X1), R^{x2} is a divalent hydrocarbon group. The number of carbon atoms of the divalent hydrocarbon group is not particularly limited as long as the purpose of the present invention is not impaired. Because the resin (X) is easily obtained or prepared, number of carbon atoms of the divalent hydrocarbon group as R^{x2} is preferably 1 to 20, more preferably 1 to 12, particularly preferably 1 to 10, and the most preferably 1 to 6.

The divalent hydrocarbon group as R^{x2} may be an aliphatic group, an aromatic group, and a hydrocarbon group including an aliphatic moiety and an aromatic moiety. When the divalent hydrocarbon group is an aliphatic group, the aliphatic group may be a saturated aliphatic group or an unsaturated aliphatic group. Furthermore, a structure of the aliphatic group may be a linear, branched, or cyclic, or a combination of these structures.

Specific examples of R^{x2} include a methylene group, an ethane-1,2-diyl group, an ethane-1,1-diyl group, a propane-1,3-diyl group, a propane-1,1-diyl group, a propane-2,2-diyl group, an n-butane-1,4-diyl group, an n-pentane-1,5-diyl group, an n-hexane-1,6-diyl group, an n-heptane-1,7-diyl group, an n-octane-1,8-diyl group, an n-nonane-1,9-diyl group, an n-decane-1,10-diyl group, an o-phenylene group, an m-phenylene group, a p-phenylene group, a naphthalene-2,6-diyl group, a naphthalene-2,7-diyl group, a naphthalene-1,4-diyl group, a biphenyl -4,4'-diyl group, and the like.

R^{x3} is -OH, -O-R^{x4}, or -NH-R^{x4}, and R^{x4} is a hydrocarbon group substituted with one or more functional groups selected from the group consisting of a hydroxyl group, a cyano group, and a carboxy group. The hydrocarbon group constituting a main skeleton of the group of R^{x4} may be a linear, branched, or cyclic aliphatic group, or an aromatic hydrocarbon group. The number of carbon atoms of the linear, branched, or cyclic aliphatic group is preferably 1 to 20, and more preferably 1 to 12. Suitable examples of the linear or branched aliphatic group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a sec-pentyl group, a tert-pentyl group, an n- hexyl group, an n-heptyl group, an n-octyl group, an n-nonyl group, an n-decyl group, and the like. Suitable examples of the cyclic aliphatic group include cycloalkyl groups such as a cyclopropyl group, a cyclobutyl group, a cyclopentyl group, a cyclohexyl group, a cycloheptyl group, and a cyclooctyl group; groups in which one hydrogen atom is removed from polycycloalkanes such as adamantane, norbornane, isobornane, tricyclodecane, and tetracyclododecane, groups in which one hydrogen atom is removed from C1-C4 alkyl substitutes of the above-listed polycycloalkanes, or the like. Suitable examples of the aromatic hydrocarbon group include a phenyl group, a naphthyl group, an anthranil group, a phenanthrenyl group, a biphenylyl group, and the like. The aromatic hydrocarbon group may be substituted with a C1-C4 alkyl group such as a methyl group and an ethyl group.

Particularly preferable specific examples of the unit derived from a monomer represented by formula (X1) include the following units x1-1 to x1-9. Among the following units x1-1 to x1-9, units x1-1 to x1-4 are more preferable.

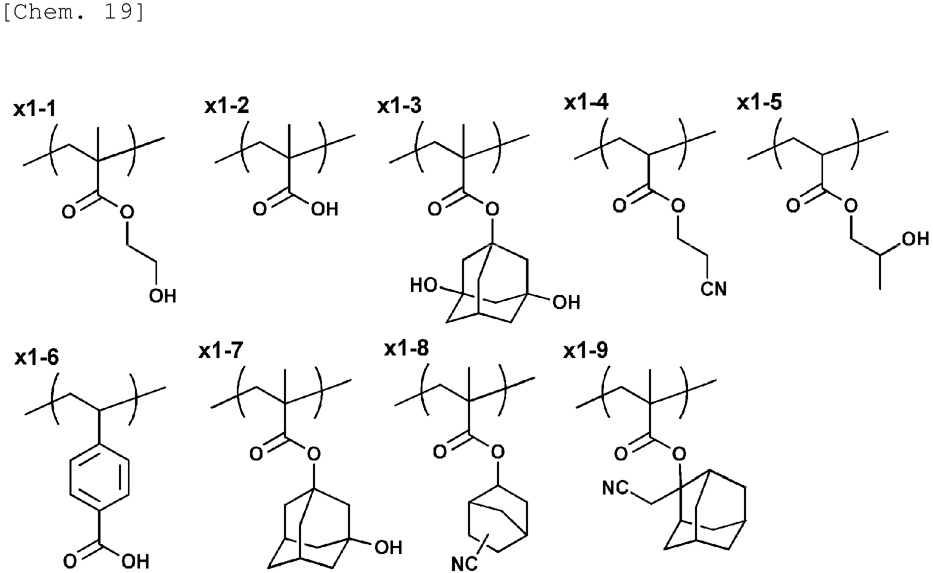

As the functional group β that is a hydrophilic group of the resin (X), a group represented by the above formula (A5) is preferable. As the monomeric compound giving a unit including the functional group β is preferably a compound represented by the above formula (A8) is preferable.

The second aqueous treatment liquid can be prepared by mixing the above-described resin (X), strong acid (Y), and aqueous solvent (Z) in a desired ratio. The use amount of the strong acid (Y) is preferably 0.1 to 20 parts by mass, more preferably 0.1 to 10 parts by mass, particularly preferably 0.1 to 5 parts by mass, and the most preferably 1 to 3 parts by mass with respect to 100 parts by mass of the resin (X). The strong acid (Y) is not particularly limited, and trifluoromethane sulfonic acid and the like can be suitably used.

Suitable specific examples of the resin (X) include the following Resin-1 to Resin-11 but the examples are not limited to this. Note here that in the following formula, a numerical value in the parentheses at the right lower part shows the content (mol%) of the constituent unit included in each resin.

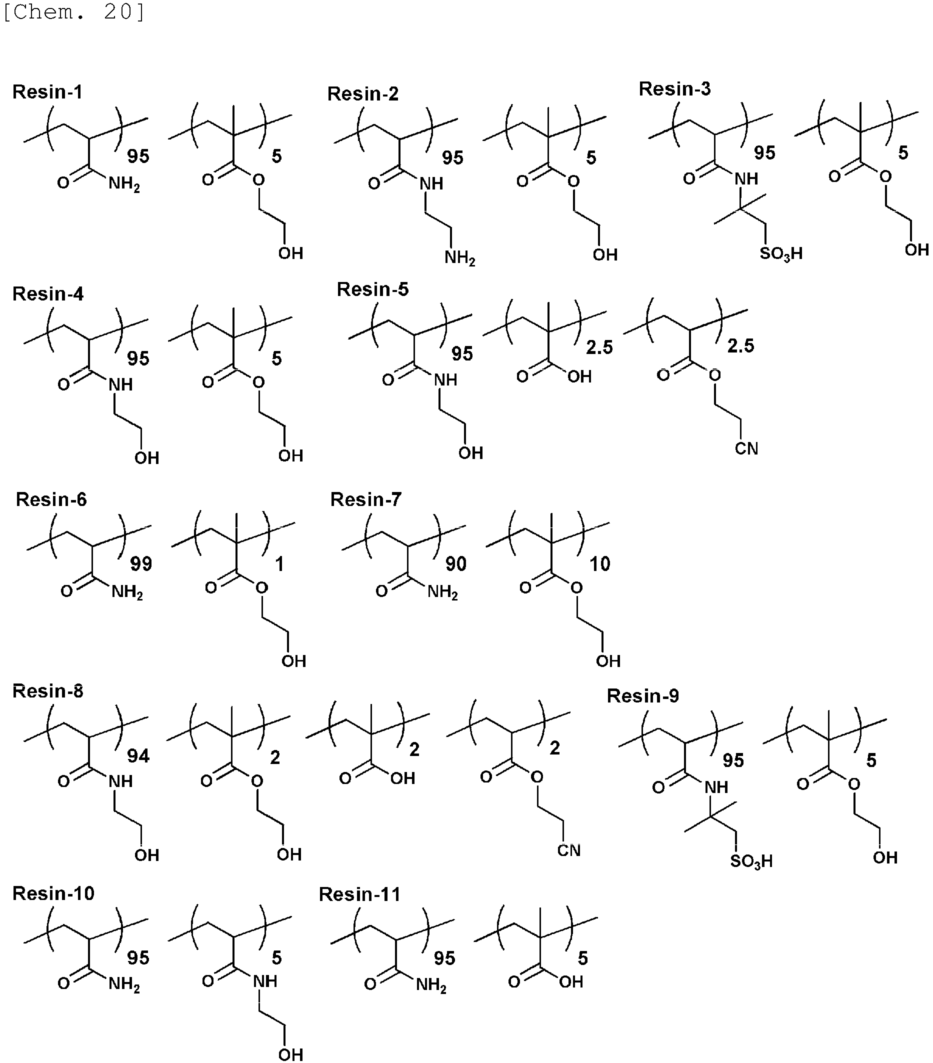

The aqueous solvent (Z) is not necessarily limited thereto. As the aqueous solvent (Z), for example, pure water or an aqueous solution of propylene glycol monomethyl ether can be used. The use amount of the aqueous solvent (Z) is not particularly limited, but the amount may be about 3000 to 70000 parts by mass with respect to 100 parts by mass of resin (X) .

### EXAMPLES

Hereinafter, the present invention will be explained more specifically by way of Examples. However, the present invention is not limited to the following Examples.

### [Examples 1 to 9, 12 and 14, Reference Examples 1, 2, 3, 4 and 5 and Comparative Examples 1 to 3]

In each Example and Comparative Example, resin containing the constituent units to be described below in the ratios listed in Table 1 was used as resin (A). The constituent units N1 to N3 are a constituent unit (a1) having a functional group I that is a nitrogen-containing heterocyclic group. Note here that the constituent units N2 and N3 include a nitrogen-containing heterocyclic group as a cationic group, and the constituent unit N2 includes a phenolic hydroxyl group as an anionic group. The constituent units C1 to C3 are a constituent unit (a2) that has a cationic group in a side chain. The constituent units D1~D4 are a constituent unit (a3) that has an anionic group in a side chain. The constituent units E1~E4 are the constituent unit (a4) other than the constituent unit (a1), constituent unit (a2), and constituent unit (a3).

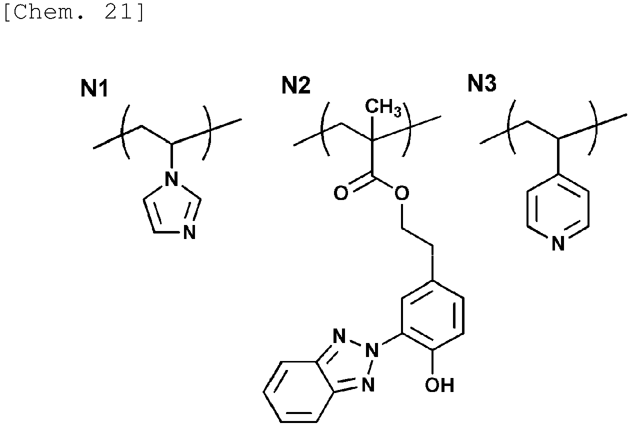

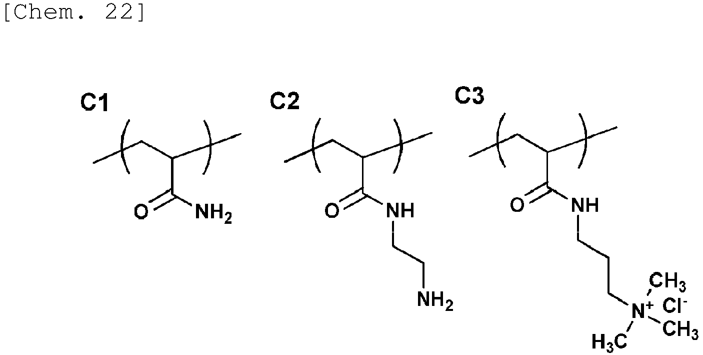

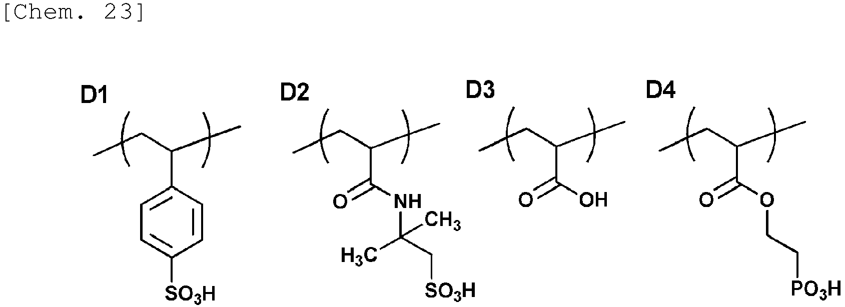

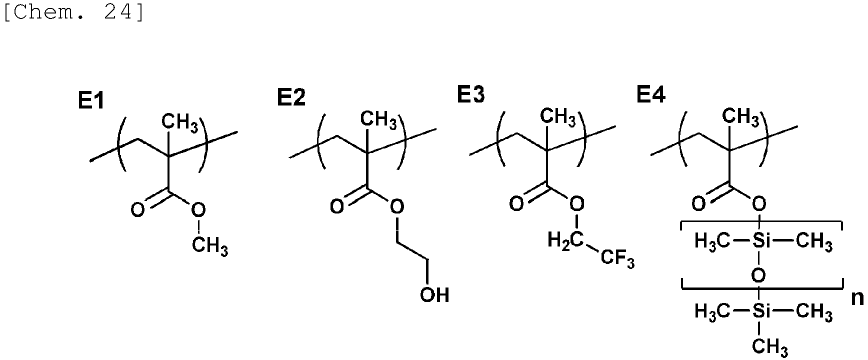

### (Preparation of surface treatment liquid)

Resins (A) including the constituent units of types and molar ratios described in Tables 1 and 2 were dissolved in pure water such that the concentration became 1 mass% to obtain surface treatment liquid of each Example and Comparative Example.

### (Evaluation of surface treatment effect)

Surface treatment of a PET film was carried out with the following method, by using the surface treatment liquids of Examples 1 to 9, 12 and 14, Reference Examples 1, 2, 3, 4 and 5 and Comparative Examples 1 to 3, which were obtained with the above-described method. Specifically, a PET film (T100, manufactured by Mitsubishi Polyester Inc.) was immersed in a surface treatment liquid for one minute, the surface of the PET film was rinsed with pure water, and further the surface of the PET film was dried by blowing nitrogen to obtain a surface-treated PET film. The water contact angle on the surface of the PET film after surface treatment was measured using Dropmaster 700 (manufactured by Kyowa Interface Science Co., Ltd.) as follows: a pure water droplet (2.0 µL) was dropped onto a surface-treated surface of a substrate, and the contact angle was measured after 10 seconds of dropping. Measurement results of the water contact angles are listed in Tables 1 and 2. Note here that the water contact angle with respect to an untreated PET film is 72°.

**[Table 1]**

| Constituent unit | | | Example | | | | | | | | | | | | | | | |
|---|---|---|---|---|---|---|---|---|---|---|---|---|---|---|---|---|---|---|
| Types | | Property | 1 | 2 | 3 | 4 | 5 | 6 | 7 | 8 | 9 | Reference Example 1 | Reference Example 2 | 12 | Reference Example 4 | 14 | Reference Example 5 | Reference Example 3 |
| a1 | N1 | - | 10 | 5 | 10 | 90 | 50 | 30 | 10 | 90 | 5 | - | - | 10 | 30 | 50 | 30 | - |
| | N2 | - | - | - | - | - | - | - | - | - | - | 5 | - | - | - | - | - | - |
| | N3 | - | - | - | - | - | - | - | - | - | - | - | 10 | 5 | - | - | - | 50 |
| a2 | C1 | Hydrophilic | - | - | - | - | 50 | 70 | - | - | - | 90 | - | - | - | - | - | - |
| | C2 | Hydrophilic | - | - | - | - | - | - | 90 | - | - | - | - | - | - | - | - | - |
| | C3 | Hydrophilic | - | - | - | - | - | - | - | 10 | - | - | - | - | - | - | - | - |
| a3 | D1 | Hydrophilic | - | - | - | - | - | - | - | - | - | - | - | - | - | - | - | - |
| | D2 | Hydrophilic | - | 95 | - | - | - | - | - | - | 50 | - | 90 | - | - | - | 5 | - |
| | D3 | Hydrophilic | - | - | 90 | - | - | - | - | - | 45 | - | - | 85 | - | - | - | - |
| | D4 | Hydrophilic | - | - | - | 10 | - | - | - | - | - | - | - | - | - | - | - | - |
| a4 | E1 | - | - | - | - | - | - | - | - | - | - | - | - | - | - | - | - | - |
| | E2 | Hydrophilic | - | - | - | - | - | - | - | - | - | 5 | - | - | - | - | - | - |
| | E3 | Hydrophobic | - | - | - | - | - | - | - | - | - | - | - | - | 70 | - | 65 | - |
| | E4 | Hydrophobic | - | - | - | - | - | - | - | - | - | - | - | - | - | 50 | - | 50 |
| Water contact angle after treatment (°) | | | 16 | 17 | 34 | 32 | 27 | 18 | 21 | 35 | 24 | 25 | 21 | 26 | 86 | 88 | 78 | 84 |

**[Table 2]**

| Constituent unit | | | Comparative Example | | |
|---|---|---|---|---|---|
| Types | | Property | 1 | 2 | 3 |
| a1 | N1 | - | - | - | 5 |
| | N2 | - | - | - | - |
| | N3 | - | - | - | - |
| a2 | C1 | Hydrophilic | - | 15 | - |
| | C2 | Hydrophilic | - | - | - |
| | C3 | Hydrophilic | - | - | - |
| a3 | D1 | Hydrophilic | 100 | - | - |
| | D2 | Hydrophilic | - | 85 | - |
| | D3 | Hydrophilic | - | - | - |
| | D4 | Hydrophilic | - | - | - |
| a4 | E1 | - | - | - | 95 |
| | E2 | Hydrophilic | - | - | - |
| | E3 | Hydrophobic | - | - | - |
| | E4 | Hydrophobic | - | - | - |
| Water contact angle after treatment(°) | | | 72 | 72 | 70 |

According to Examples, it is shown that use of a surface treatment liquid including a resin (A) having a functional group I that is a nitrogen-containing heterocyclic group and a functional group II that is a functional group other than the functional group I and is one or more groups selected from hydrophilic groups and hydrophobic groups, and including one or more constituent units selected from the group consisting of a constituent unit (a1) that has the functional group I, a constituent unit (a2) that has a cationic group in a side chain, and a constituent unit (a3) that has an anionic group in a side chain according to the invention can successfully make the surface of the PET film hydrophilic or hydrophobic. On the other hand, according to Comparative Example, the resin (A) does not have a functional group I that is a nitrogen-containing heterocyclic group, or does not include a constituent unit (a2) that has a cationic group in a side chain, and a constituent unit (a3) that has an anionic group in a side chain, it is shown that a desired surface treatment effect is not easily obtained.

## Claims

1. A surface treatment liquid, comprising a resin (A) and a solvent (C),
wherein the resin (A) has a functional group I that is a nitrogen-containing heterocyclic group and a functional group II that is a functional group other than the functional group I and is one or more groups selected from hydrophilic groups and hydrophobic groups, and
the resin (A) comprises a constituent unit (a1) having the functional group I, and one or more constituent units selected from the group consisting of a constituent unit (a2) having a cationic group in a side chain and a constituent unit (a3) having an anionic group in a side chain,
wherein, in the constituent unit (a1) having the functional group I, when the functional group I is in the side chain and the nitrogen-containing heterocyclic group as the functional group I is a functional group that can be made to be cationic, the resin (A) may not need to have a constituent unit (a2) in addition to the constituent unit (a1), and when an anionic group selected from a phenolic hydroxyl group or a carboxy group is included in the constituent unit (a1) that has the functional group I, the resin (A) need not include the constituent unit (a3) in addition to the constituent unit (a1),
wherein the hydrophilic group is an anionic group or a cationic group,
wherein the cationic group is selected from a functional group consisting of a cation and a counter anion, and a functional group that can be made to be cationic, and the anionic group is selected from a functional group consisting of an anion and counter cation, and a functional group that can be made to be anionic, and
wherein the compound giving a nitrogen-containing heterocyclic group is at least one compound selected from the group consisting of pyrrole, oxazole, isoxazole, oxadiazole, thiazole, isothiazole, thiadiazole, imidazole, triazole, pyrazine, pyrimidine, pyridazine, triazine, tetrazine, pentazine, indole, isoindole, indolizine, benzimidazole, benzoxazole, benzothiazole, carbazole, purine, quinoline, isoquinoline, quinazoline, phthalazine, cinnoline, and quinoxaline, and
wherein the hydrophobic group is one or more groups selected from the group consisting of a silyl group, and a siloxane group.

2. The surface treatment liquid according to claim 1, wherein the resin (A) may further comprise other constituent unit (a4) other than the constituent unit (a1), the constituent unit (a2), and the constituent unit (a3),
an amount of the constituent unit (a1) in the total constituent units of the resin (A) is 2 mol% or more,
a sum of an amount of the constituent unit (a1) and an amount of the constituent unit (a2) is 7O to 100 mol% or 2 to 30 mol% with respect to the total constituent units of the resin (A),
when a sum of an amount of the constituent unit (a1) and an amount of the constituent unit (a2) is 70 to 100 mol% with respect to the total constituent units of the resin (A), the amount of the constituent unit (a3) is O to 30 mol%,
when a sum of an amount of the constituent unit (a1) and an amount of the constituent unit (a2) is 2 to 30 mol% with respect to the total constituent units of the resin (A), an amount of the constituent unit (a3) is 70 to 98 mol%.

3. The surface treatment liquid according to claim 1 or 2, wherein the hydrophilic group is a group represented by the following formula (A5):
-NH-R1 (A5)
wherein R¹ is an alkyl group having 1 to 4 carbon atoms, which is substituted with one or more groups selected from the group consisting of an amino group, a sulfonic group, and a hydroxyl group, or a hydrogen atom.

4. The surface treatment liquid according to claim 1 or 2, wherein the functional group II comprises a hydrophobic group, and
the hydrophobic group is derived from a monomer represented by the following formula (A6):
CH₂=CR ²-(CO-O)ₐ-R³ ... (A6)
wherein R² is a hydrogen atom or a methyl group, a is 0 or 1, R³ is a group represented by the following formula (A7):
-SiR⁴R⁵-(-O-SiR⁴R⁵-)n-R⁶ (A7),
and R⁴, R⁵, and R⁶ are, each independently a hydrocarbon group having 1 to 6 carbon atoms, and n is an integer of O or more.

5. The surface treatment liquid according to any one of claims 1 to 3, wherein the functional group 11 comprises a hydrophilic group,
and the hydrophilic group is derived from a monomer represented by the following formula (A8):
CH₂=CR²-CO-NH-R¹ (A8)
wherein R¹ is an alkyl group having 1 to 4 carbon atoms, which is substituted with one or more groups selected from the group consisting of an amino group, a sulfonic group, and a hydroxyl group, and R² is a hydrogen atom or a methyl group.

6. The surface treatment liquid according to any one of claims 1 to 5, wherein the constituent unit (a2) is a constituent unit derived from a compound represented by the following formula (A2):
CH₂ = CR²-(CO)a-R^{1O} (A2)
wherein R² is a hydrogen atom or a methyl group, R¹⁰ is a group represented by -Y-R¹¹-R¹², or an amino group, Y is -O-, or -NH-, R¹¹ is a divalent organic group optionally having a substituent, R¹² is an amino group which is optionally substituted with a hydrocarbon group having 1 to 6 carbon atoms, or a quaternary ammonium salt group represented by -N⁺R¹³R¹⁴R¹⁵·Z⁻, R¹³, R¹⁴, and R¹⁵ are, each independently a hydrogen atom, or a hydrocarbon group having 1 to 6 carbon atoms, Z⁻ is a counter anion, and a is O or 1.

7. The surface treatment liquid according to any one of claims 1 to 6, wherein the constituent unit (a3) is a constituent unit derived from a compound represented by the following formula (A3):
CH₂=CR²- (co)_{b}-R¹⁷ (A3)
wherein the formula (A3), R² is a hydrogen atom or a methyl group, R¹⁷ is a hydroxyl group, or a group represented by -A-R¹⁸-R¹⁹, A.is -O-, or -NH-, R¹⁸ is a divalent organic group optionally having a substituent, R¹⁹ is a Brønsted acidic group, b is O or 1,
wherein when b is O, R¹⁷ is not a hydroxyl group.

8. The surface treatment liquid according to any one of claims 1 to 7, further comprising a strong acid (B) having a pKa of 1 or less.

9. The surface treatment liquid according to any one of claims 1 to 8, wherein the solvent (C) comprises water.

10. A surface treatment method, comprising bringing the surface treatment liquid according to any one of claims 1 to 9 into contact with a treatment target.

11. A surface treatment method comprising bringing the surface treatment liquid according to claim 1, 2, 3, or 5 into contact with a surface of the treatment target; and
further treating the surface of the treatment target wetted with the surface treatment with a second aqueous treatment liquid other than the surface treatment liquid.

## Patentansprüche

1. Flüssigkeit zur Oberflächenbehandlung, umfassend ein Harz (A) und ein Lösungsmittel (C), wobei das Harz (A) eine funktionelle Gruppe I, die eine stickstoffhaltige heterocyclische Gruppe ist, und eine funktionelle Gruppe II, die eine andere funktionelle Gruppe als die funktionelle Gruppe I ist, aufweist und eine oder mehrere Gruppen ausgewählt aus hydrophilen Gruppen und hydrophoben Gruppen ist, und
das Harz (A) eine Aufbaueinheit (a1) mit der funktionellen Gruppe I und eine oder mehrere Aufbaueinheiten ausgewählt aus der Gruppe bestehend aus einer Aufbaueinheit (a2) mit einer kationischen Gruppe in einer Seitenkette und einer Aufbaueinheit (a3) mit einer anionischen Gruppe in einer Seitenkette umfasst,
wobei in der Aufbaueinheit (a1) mit der funktionellen Gruppe I, wenn die funktionelle Gruppe I in der Seitenkette ist und die stickstoffhaltige heterocyclische Gruppe als funktionelle Gruppe I eine funktionelle Gruppe ist, die kationisch gemacht werden kann, das Harz (A) keine Aufbaueinheit (a2) zusätzlich zu der Aufbaueinheit (a1) umfassen muss und, wenn eine anionische Gruppe ausgewählt aus einer phenolischen Hydroxygruppe oder einer Carboxygruppe von der Aufbaueinheit (a1), die die funktionelle Gruppe I aufweist, umfasst ist, das Harz (a) keine Aufbaueinheit (a3) zusätzlich zu der Aufbaueinheit (a1) umfassen muss,
wobei die hydrophile Gruppe eine anionische Gruppe oder eine kationische Gruppe ist,
wobei die kationische Gruppe ausgewählt ist aus einer funktionellen Gruppe, bestehend aus einem Kation und einem Gegenanion, und einer funktionellen Gruppe, die kationisch gemacht werden kann, und die anionische Gruppe ausgewählt ist aus einer funktionellen Gruppe, bestehend aus einem Anion und einem Gegenkation, und einer funktionellen Gruppe, die anionisch gemacht werden kann, und
wobei die Verbindung, die eine stickstoffhaltige heterocyclische Gruppe bereitstellt, mindestens eine Verbindung ist ausgewählt aus der Gruppe bestehend aus Pyrrol, Oxazol, Isoxazol, Oxadiazol, Thiazol, Isothiazol, Thiadiazol, Imidazol, Triazol, Pyrazin, Pyrimidin, Pyridazin, Triazin, Tetrazin, Pentazin, Indol, Isoindol, Indolizin, Benzimidazol, Benzoxazol, Benzothiazol, Carbazol, Purin, Chinolin, Isochinolin, Chinazolin, Phthalazin, Cinnolin und Chinoxaline und
wobei die hydrophobe Gruppe eine oder mehrere Gruppen ist, ausgewählt aus der Gruppe bestehend aus einer Silylgruppe und einer Siloxangruppe.

2. Flüssigkeit zur Oberflächenbehandlung nach Anspruch 1, wobei das Harz (A) ferner eine andere Aufbaueinheit (a4) als die Aufbaueinheit (a1), die Aufbaueinheit (a2) und die Aufbaueinheit (a3) umfassen kann
wobei eine Menge der Aufbaueinheit (a1) in den gesamten Aufbaueinheiten des Harzes (A) 2 Mol-% oder mehr beträgt,
eine Summe einer Menge der Aufbaueinheit (a1) und einer Menge der Aufbaueinheit (a2) 70 bis 100 Mol-% oder 2 bis 30 Mol-% in Bezug auf die gesamten Aufbaueinheiten des Harzes (A) beträgt,
wenn eine Summe einer Menge der Aufbaueinheit (a1) und einer Menge der Aufbaueinheit (a2) 70 bis 100 Mol-% in Bezug auf die gesamten Aufbaueinheiten des Harzes (A) beträgt, die Menge der Aufbaueinheit (a3) 0 bis 30 Mol-% beträgt,
wenn eine Summe einer Menge der Aufbaueinheit (a1) und einer Menge der Aufbaueinheit (a2) 2 bis 30 Mol-% in Bezug auf die gesamten Aufbaueinheiten des Harzes (A) beträgt, eine Menge der Aufbaueinheit (a3) 70 bis 98 Mol-% beträgt.

3. Flüssigkeit zur Oberflächenbehandlung nach Anspruch 1 oder 2, wobei die hydrophile Gruppe eine Gruppe der folgenden Formel (A5) ist:
-NH-R¹ (A5)
wobei R¹ eine Alkylgruppe mit 1 bis 4 Kohlenstoffatomen ist, die mit einer oder mehreren Gruppen, ausgewählt aus der Gruppe, bestehend aus einer Aminogruppe, einer Sulfongruppe und einer Hydroxygruppe, oder einem Wasserstoffatom substituiert ist.

4. Flüssigkeit zur Oberflächenbehandlung nach Anspruch 1 oder 2, wobei die funktionelle Gruppe II eine hydrophobe Gruppe umfasst und
die hydrophobe Gruppe von einem Monomer, dargestellt durch die folgende Formel (A6), abgeleitet ist:
CH₂=CR²-(CO-O)ₐ-R³ ... (A6)
wobei R² ein Wasserstoffatom oder eine Methylgruppe ist, a 0 oder 1 ist, R³ eine Gruppe ist, die durch die folgende Formel (A7) dargestellt ist:
-SiR⁴R⁵-(-O-SiR⁴R⁵-)n-R⁶ (A7)
und R⁴, R⁵ und R⁶ jeweils unabhängig eine Kohlenwasserstoffgruppe mit 1 bis 6 Kohlenstoffatomen sind und n eine ganze Zahl von 0 oder mehr ist.

5. Flüssigkeit zur Oberflächenbehandlung nach einem der Ansprüche 1 bis 3, wobei die funktionelle Gruppe II eine hydrophile Gruppe umfasst
und die hydrophile Gruppe von einem Monomer, dargestellt durch die folgende Formel (A8), abgeleitet ist:
CH₂=CR²-CO-NH-R¹ (A8)
Wobei R¹ eine Alkylgruppe mit 1 bis 4 Kohlenstoffatomen ist, die mit einer oder mehreren Gruppen ausgewählt aus der Gruppe bestehend aus einer Aminogruppe, einer Sulfongruppe und einer Hydroxygruppe substituiert ist, und R² ein Wasserstoffatom oder eine Methylgruppe ist.

6. Flüssigkeit zur Oberflächenbehandlung nach einem der Ansprüche 1 bis 5, wobei die Aufbaueinheit (a2) eine Aufbaueinheit ist, die von einer Verbindung, dargestellt durch die folgende Formel (A2), abgeleitet ist:
CH₂=CR²-(CO)a-R¹⁰ (A2)
Wobei R² ein Wasserstoffatom oder eine Methylgruppe ist, R¹⁰ eine durch -Y-R¹¹-R¹² dargestellte Gruppe oder eine Aminogruppe ist, Y -O- oder -NH- ist, R¹¹ eine zweiwertige organische Gruppe ist, die gegebenenfalls einen Substituenten aufweist, R¹² eine Aminogruppe ist, die gegebenenfalls mit einer Kohlenwasserstoffgruppe mit 1 bis 6 Kohlenstoffatomen substituiert ist, oder eine quaternäre Ammoniumsalzgruppe, dargestellt durch -N⁺R¹³R¹⁴R¹⁵·Z⁻, R¹³, R¹⁴ und R¹⁵ jeweils unabhängig ein Wasserstoffatom oder eine Kohlenwasserstoffgruppe mit 1 bis 6 Kohlenstoffatomen sind, Z⁻ ein Gegenanion ist und a 0 oder 1 ist.

7. Flüssigkeit zur Oberflächenbehandlung nach einem der Ansprüche 1 bis 6, wobei die Aufbaueinheit (a3) eine Aufbaueinheit ist, die von einer Verbindung, dargestellt durch die folgende Formel (A3), abgeleitet ist:
CH₂=CR²-(CO)_{b}-R¹⁷ (A3)
wobei in der Formel (A3) R² ein Wasserstoffatom oder eine Methylgruppe ist, R¹⁷ eine Hydroxygruppe oder eine durch -A-R¹⁸-R¹⁹ dargestellte Gruppe ist, A -O- oder -NH- ist, R¹⁸ eine zweiwertige organische Gruppe ist, die gegebenenfalls einen Substituenten aufweist, R¹⁹ eine Brønsted-Säuregruppe ist, b 0 oder 1 ist,
wobei, wenn b 0 ist, R¹⁷ keine Hydroxygruppe ist.

8. Flüssigkeit zur Oberflächenbehandlung nach einem der Ansprüche 1 bis 7, ferner umfassend eine starke Säure (B) mit einem pKa von 1 oder weniger.

9. Flüssigkeit zur Oberflächenbehandlung nach einem der Ansprüche 1 bis 8, wobei das Lösungsmittel (C) Wasser umfasst.

10. Oberflächenbehandlungsverfahren, umfassend ein Inkontaktbringen der Flüssigkeit zur Oberflächenbehandlung nach einem der Ansprüche 1 bis 9 mit einem Behandlungsziel.

11. Oberflächenbehandlungsverfahren, umfassend ein Inkontaktbringen der Flüssigkeit zur Oberflächenbehandlung nach Anspruch 1, 2, 3 oder 5 mit einer Oberfläche des Behandlungsziels; und
weiteres Behandeln der mit der Oberflächenbehandlung benetzten Oberfläche des Behandlungsziels mit einer zweiten wässrigen Behandlungsflüssigkeit, die von der Flüssigkeit zur Oberflächenbehandlung verschieden ist.

## Revendications

1. Liquide de traitement de surface, comprenant une résine (A) et un solvant (C), dans lequel la résine (A) présente un groupe fonctionnel I qui est un groupe hétérocyclique azoté et un groupe fonctionnel II qui est un groupe fonctionnel autre que le groupe fonctionnel I et est un ou plusieurs groupes sélectionnés parmi les groupes hydrophiles et les groupes hydrophobes, et
la résine (A) comprend un motif constitutif (a1) ayant le groupe fonctionnel I, et un ou plusieurs motifs constitutifs sélectionnés dans le groupe constitué d'un motif constitutif (a2) ayant un groupe cationique dans une chaîne latérale et un motif constitutif (a3) ayant un groupe anionique dans une chaîne latérale,
dans lequel, dans le motif constitutif (a1) ayant le groupe fonctionnel I, quand le groupe fonctionnel I est dans la chaîne latérale et le groupe hétérocyclique azoté en tant que groupe fonctionnel I est un groupe fonctionnel qui peut être rendu cationique, la résine (A) peut ne pas avoir besoin d'avoir un motif constitutif (a2) en plus du motif constitutif (a1), et quand un groupe anionique sélectionné parmi un groupe hydroxyle phénolique ou un groupe carboxy est inclus dans le motif constitutif (a1) qui présente le groupe fonctionnel I, la résine (A) n'a pas besoin d'inclure le motif constitutif (a3) en plus du motif constitutif (a1),
dans lequel le groupe hydrophile est un groupe anionique ou un groupe cationique, dans lequel le groupe cationique est sélectionné parmi un groupe fonctionnel constitué d'un cation et d'un contre-anion, et un groupe fonctionnel qui peut être rendu cationique, et le groupe anionique est sélectionné parmi un groupe fonctionnel constitué d'un anion et d'un contre-cation, et un groupe fonctionnel qui peut être rendu anionique, et
dans lequel le composé donnant un groupe hétérocyclique azoté est au moins un composé sélectionné dans le groupe constitué du pyrrole, de l'oxazole, de l'isoxazole, de l'oxadiazole, du thiazole, de l'isothiazole, du thiadiazole, de l'imidazole, du triazole, de la pyrazine, de la pyrimidine, de la pyridazine, de la triazine, de la tétrazine, de la pentazine, de l'indole, de l'isoindole, de l'indolizine, du benzimidazole, du benzoxazole, du benzothiazole, du carbazole, de la purine, de la quinoléine, de l'isoquinoléine, de la quinazoline, de la phtalazine, de la cinnoline et de la quinoxaline, et
dans lequel le groupe hydrophobe est un ou plusieurs groupes sélectionnés dans le groupe constitué d'un groupe silyle, et d'un groupe siloxane.

2. Liquide de traitement de surface selon la revendication 1, dans lequel la résine (A) peut comprendre en outre un autre motif constitutif (a4) autre que le motif constitutif (a1), le motif constitutif (a2) et le motif constitutif (a3),
une quantité du motif constitutif (a1) dans les motifs constitutifs totaux de la résine (A) est de 2 % en mole ou plus,
une somme d'une quantité du motif constitutif (a1) et d'une quantité du motif constitutif (a2) est de 70 à 100 % en mole ou de 2 à 30 % en mole par rapport aux motifs constitutifs totaux de la résine (A),
quand une somme d'une quantité du motif constitutif (a1) et d'une quantité du motif constitutif (a2) est de 70 à 100 % en mole par rapport aux motifs constitutifs totaux de la résine (A), la quantité du motif constitutif (a3) est de 0 à 30 % en mole,
quand une somme d'une quantité du motif constitutif (a1) et d'une quantité du motif constitutif (a2) est de 2 à 30 % en mole par rapport aux motifs constitutifs totaux de la résine (A), une quantité du motif constitutif (a3) est de 70 à 98 % en mole.

3. Liquide de traitement de surface selon la revendication 1 ou 2, dans lequel le groupe hydrophile est un groupe représenté par la formule (A5) suivante :
-NH-R1 (A5)
dans laquelle R¹ est un groupe alkyle ayant 1 à 4 atomes de carbone, qui est substitué avec un ou plusieurs groupes sélectionnés dans le groupe constitué d'un groupe amino, d'un groupe sulfonique, et d'un groupe hydroxyle, ou un atome d'hydrogène.

4. Liquide de traitement de surface selon la revendication 1 ou 2, dans lequel le groupe fonctionnel II comprend un groupe hydrophobe, et
le groupe hydrophobe est dérivé d'un monomère représenté par la formule (A6) suivante :
CH₂=CR²-(CO-O)ₐ-R³ (A6)
dans laquelle R² est un atome d'hydrogène ou un groupe méthyle, a est 0 ou 1, R³ est un groupe représenté par la formule (A7) suivante :
-SiR⁴R⁵-(-O-SiR⁴R⁵-)n-R⁶ (A7),
et R⁴, R⁵, et R⁶ sont, chacun indépendamment, un groupe hydrocarboné ayant 1 à 6 atomes de carbone, et n est un nombre entier égal à 0 ou plus.

5. Liquide de traitement de surface selon l'une quelconque des revendications 1 à 3, dans lequel le groupe fonctionnel II comprend un groupe hydrophile,
et le groupe hydrophile est dérivé d'un monomère représenté par la formule (A8) suivante :
CH₂=CR²-CO-NH-R¹ (A8)
dans laquelle R¹ est un groupe alkyle ayant de 1 à 4 atomes de carbone, qui est substitué avec un ou plusieurs groupes sélectionnés dans le groupe constitué d'un groupe amino, d'un groupe sulfonique, et d'un groupe hydroxyle, et R² est un atome d'hydrogène ou un groupe méthyle.

6. Liquide de traitement de surface selon l'une quelconque des revendications 1 à 5, dans lequel le motif constitutif (a2) est un motif constitutif dérivé d'un composé représenté par la formule (A2) suivante :
CH₂=CR²-(CO)a-R¹⁰ (A2)
dans laquelle R² est un atome d'hydrogène ou un groupe méthyle, R¹⁰ est un groupe représenté par -Y-R¹¹-R¹², ou un groupe amino, Y est -O-, ou -NH-, R¹¹ est un groupe organique divalent ayant facultativement un substituant, R¹² est un groupe amino qui est facultativement substitué avec un groupe hydrocarboné ayant 1 à 6 atomes de carbone, ou un groupe sel d'ammonium quaternaire représenté par -N⁺R¹³R¹⁴R¹⁵·Z⁻, R¹³, R¹⁴, et R¹⁵ sont, chacun indépendamment un atome d'hydrogène, ou un groupe hydrocarboné ayant 1 à 6 atomes de carbone, Z⁻ est un contre-anion, et a est 0 ou 1.

7. Liquide de traitement de surface selon l'une quelconque des revendications 1 à 6, dans lequel le motif constitutif (a3) est un motif constitutif dérivé d'un composé représenté par la formule (A3) suivante :
CH₂=CR²-(co)_{b}-R¹⁷ (A3)
dans laquelle la formule (A3), R² est un atome d'hydrogène ou un groupe méthyle, R¹⁷ est un groupe hydroxyle, ou un groupe représenté par -A-R¹⁸-R¹⁹, A est -O-, ou -NH-, R¹⁸ est un groupe organique divalent ayant facultativement un substituant, R¹⁹ est un groupe acide de Brønsted, b est 0 ou 1,
dans lequel quand b est 0, R¹⁷ n'est pas un groupe hydroxyle.

8. Liquide de traitement de surface selon l'une quelconque des revendications 1 à 7, comprenant en outre un acide fort (B) ayant un pKa de 1 ou moins.

9. Liquide de traitement de surface selon l'une quelconque des revendications 1 à 8, dans lequel le solvant (C) comprend de l'eau.

10. Procédé de traitement de surface, comprenant la mise en contact du liquide de traitement de surface selon l'une quelconque des revendications 1 à 9 avec une cible de traitement.

11. Procédé de traitement de surface comprenant la mise en contact du liquide de traitement de surface selon la revendication 1, 2, 3, ou 5 avec une surface de la cible de traitement ; et
le traitement supplémentaire de la surface de la cible de traitement mouillée avec le traitement de surface avec un second liquide de traitement aqueux autre que le liquide de traitement de surface.
